(19) Europäisches Patentamt
European Patent Office
Office européen des brevets

(11) **EP 1 464 981 B1**

(12) **EUROPEAN PATENT SPECIFICATION**

(45) Date of publication and mention
of the grant of the patent:
**21.11.2007 Bulletin 2007/47**

(51) Int Cl.:
*G01S 5/14* (2006.01)    *G01C 15/00* (2006.01)
*H01Q 1/24* (2006.01)    *H04Q 7/36* (2006.01)

(21) Application number: **04076220.5**

(22) Date of filing: **22.01.2003**

(54) **Measurement of parameters of an antenna of a radio base station used for cellular telephony.**

Messung von Antennenparametern einer Basisstation für zellulare Telefonie

Acquisition de données d'antenne d'une station de base radio pour la téléphonie cellulaire

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **24.01.2002 IT RM20020036**
**20.12.2002 IT RM20020632**

(43) Date of publication of application:
**06.10.2004 Bulletin 2004/41**

(62) Document number(s) of the earlier application(s) in accordance with Art. 76 EPC:
**03425024.1 / 1 331 469**

(73) Proprietor: **Telecom Italia S.p.A.**
**20123 Milano (IT)**

(72) Inventors:
• **Giannini, Stefano**
**00159 Roma (IT)**
• **Corradini, Sergio**
**00065 Fiano Romano (IT)**
• **Balducci, Roberto**
**00152 Roma (IT)**
• **Falchi, Massimo**
**06030 Giano dell'Umbria (PG) (IT)**

• **Colangelo, Ottavio**
**00139 Roma (IT)**

(74) Representative: **Checcacci, Giorgio et al**
**Porta, Checcacci & Associati S.p.A.**
**Via Trebbia, 20**
**20135 Milano (IT)**

(56) References cited:
• **ANONYMOUS: "Laserace 300 vector measuring laser distancemeter." LASER OPTRONIX, [Online] 2 January 2002 (2002-01-02), XP002321666 Retrieved from the Internet: URL: http://web.archive.org/web/20020102144 432/http://www.laseroptronix.se/const/lase ace300.html> [retrieved on 2005-03-18] & [Online] Retrieved from the Internet: URL:http: //web.archive.org/web/*/http://ww w.laseroptronix.se/const/laseace300.html> [retrieved on 2005-03-18]**
• **ANONYMOUS: "Yardage Pro Laser Rangefinder" LASER TECHNOLOGY PRODUCTS, [Online] 21 January 2002 (2002-01-21), XP002321667 Retrieved from the Internet: URL:http: //web.archive.org/web/20010220220 521/www.afds.net/lasertech.html> [retrieved on 2005-03-18] & [Online] Retrieved from the Internet: URL:http://web.archive.org/web/*/http: //ww w.afds.net/> [retrieved on 2005-03-18]**

EP 1 464 981 B1

**Description**

The invention generally relates to the measurement of parameters characterising the positioning of an antenna of a radio base station (henceforth RBS) used for cellular telephony, and more specifically it relates to a technique that comprises several operative procedures for the measurement of the geographical coordinates, the azimuth, and the tilt of an RBS antenna, based on the interaction of devices (such as the satellite receiver and/or the total laser station), which are not specifically used for antenna's measurements, and which, in any case, are normally used separately from each other.

1. STATE OF THE ART, FIRST PART: INTRODUCTION

In the light of the new technologies related to cellular telephony transmission, and of the progress made by wireless systems like GSM 900 and 1800, and in view of future UMTS systems and new services based on geo-referencing, it is of fundamental importance, to have at one's disposal information and radio-electric data of higher quality, which are more accurate and indicative of the correct positioning of the antennas.
A difficulty arises when the radio-electric data are detected by means of the commonly used methodologies and instrumentation, since for their correct use it is necessary to get near to the antennas, and this is impossible in consideration of the safety regulations.
On the other hand, the poor accuracy by which the positions of many RBSs are known (principally due to the doubtful origin of the available data in respect of the employed detection methods and/or of the utilised reference systems), and consequently the necessity of guaranteeing the maximum coherence between the cartography and position/trim of the antennas, requires the use of appropriate instrumentation that minimises the possibility of errors.
At present, cover simulations are made by means of the aforesaid radio-electric data, but these simulations do not accurately correspond to real conditions, notwithstanding the fact that they are developed by powerful tools. In fact, in order that the operating plant be in line with the effected simulation, it would be necessary to have at one's disposal reliable data for digital cartography in combination with planning tools.
On the other hand, it is already known that the telephone network administrator already has a GPS network at his disposal, for the detection of data that may be used for furnishing the radio-electric parameters of the RBSs. These means, when used in an appropriate manner, would permit the implementation of effective operative procedures for measuring (detecting) the geographical cooridinates, the azimuth, and the tilt of an antenna of a radio base station.

2. STATE OF THE ART, SECOND PART: GPS THEORY

In order to provide a complete overview of the GPS system, in the present description the following part is concerned specifically with a short survey of the aspects related to this theory.

2.1. The system GPS-NAVSTAR

The GPS system (Global Positioning System) has been developed since 1973, mainly for military purposes, according to the requirements of the US Defence Department. Due to its feature of enabling the determination of the position of a point, that is, of its planimetry and altimetry data, this system has been applied more and more in the civil sector (e.g. topography, geodesy, hydrography, land navigation, air navigation or marine navigation).
The continuously transmitted signals, from the satellites to the earth, are characterised by two carrier frequencies:

-    L1 (freq.1575.42 MHz)
-    L2 (freq. 1227.60 MHz)

Both carrier frequencies are modulated by the "Navigation Message", which carries the information on the satellites (ephemeris and almanacs, data of the orbits, correction data of clock errors, data about the ionosphere, etc.).
Moreover, two pseudorandom codes (binary signals) are used, which in turn modulate the carrier frequency:

-    C/A (Course/Acquisition code): it modulates L1, obtaining the Standard Positioning System (SPS), which has a sufficient accuracy for some civil applications.
-    P (Precise Code): it modulates L1 and L2, obtaining the Precise Positioning System (PPS), which is encrypted in military applications by the Y-Code, that renders it in this case unusable for non-military purposes.

2.2. Determination of the position of a point

The position of a point, as in topography, can be determined by the triangulation principle, that is by measuring the distance between the point in question and other points whose position is known.

In the GPS system, a distance is measured between the receiver - used for the survey - and each of the satellites whose positions are known at each instant of time (at least four satellites are necessary in order to determine the position and altitude).

In order to measure this distance, the GPS system makes use of two different methods, by taking advantage of the signal transmitted from the satellites; the first of them does not require a particular processing, whereas the second one requires an appropriate software:

- Measure of the Pseudorange: based on the signal propagation time.
- Measure of the Phase: based on the signal phase.

The measure of the Pseudorange for distance calculation is based on the precise knowledge of the instant of time of transmission of the code sequences from each satellite, and on the instant of time of their arrival at the GPS receiver. The satellite and the receiver are synchronised and generate the same code at the same instant of time (the receiver generates this code internally). When the GPS receiver receives the code that has been transmitted from a satellite, by knowing its time of departure and the amount of time elapsed since the satellite started to generate the same code (and therefore the delay of the bit sequence), it will be possible to determine the corresponding distance.

The GPS receiver is able to determine the identity of the particular satellite that generated a pseudorandom code sequence, and to reproduce it, since each satellite is characterised by its own PRN (Pseudo Random Number).

The measure of the Phase has the same object - of determining a distance -, as the measure of the Pseudorange; however, to this end, it uses the phase of the carrier frequency. In this case, the receiver generates locally a frequency similar to the frequency transmitted by the satellite, and the latter frequency is subject to certain changes of phase along the path satellite-receiver that are due to the Doppler effect. However, the problem of the receiver is that it does not know how many complete phase cycles have occurred from the departure until the arrival of the signal, therefore until the receiver starts to measure the cycles. This unknown variable is called "entire phase ambiguity (uncertainty) (N)", and it may be calculated by the receiver provided that the measurement has been performed through a base distance - rover receiver/base receiver- shorter than 30 Km (a distance which ensures the same effect on radio signals as the troposphere and ionosphere, both towards the Rover receiver and Base receiver). The relation between the distance and phase, is as follows:

$$d = K \cdot \lambda, \text{ where } K = N + f$$

from this relation it may be seen that if the phase ambiguity (N) is not resolved, it will be impossible to determine the distance and to correct the phase.

2.3. Error correction techniques

The GPS system is normally sensitive to various factors that influence the transmission of radio signals, by varying the natural propagation times by incremental values which may be more or less relevant. These delays consequently result in errors in the determination of a point. The main reasons are:

- Absence of synchronism and/or clock errors;
- Variations of the satellite orbits;
- Crossing of the ionosphere and troposphere;
- Multipath (multiple paths);
- Selective Availability (intentional error);
- Noise at the receiver;
- Low PDOP (non - optimal satellite configuration);
- Anti Spooting (use of the Y-code instead of the P-code both on L1 and on L2).

The errors due to multiple paths, low PDOP, noise on the receiver, and use of the Y-code, cannot be eliminated or mitigated during the post-processing of a survey. On the contrary, the effect due to the other error sources may be reduced or cancelled (clock errors, variation of the orbits, Selective Availability or intentional error, delay caused by the troposphere and ionosphere) by making use of appropriate differential correction techniques (DGPS).

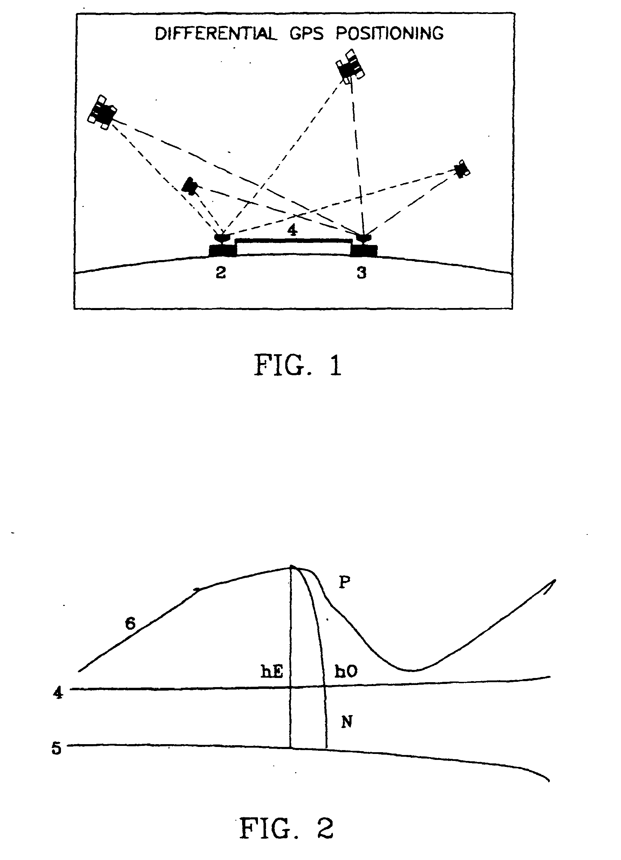

By using two receivers, of which one (Base) has a position known with high accuracy - due to the fact that its measurement is effected in long periods of time -, and the other (Rover) is used for the measurement of the point, and by processing the data collected by the satellites themselves, it is possible to make corrections in real-time or during post-processing (in the latter case by means of dedicated software). This arrangement is shown in Fig. 1, in which 2 denotes the base point of known position, and 3 indicates the remote point whose position must be determined and corrected.

The line 4 corresponds to the data link connection used for the correction. The principle according to which this is possible, is based on the fact that the position error measured by the Base for each sample, and with respect to its own (known) theoretical coordinates, is also applicable to the Rover (and thus to its position), provided that the distance between them is comprised in a certain limit expressed in Km (method of the difference vector). When this limit is exceeded, an additional error must be taken into account, which varies in proportion to the distance itself. The actual differential correction is based instead on the calculated distances depending on Pseudorange and Phase measurements, which allow to eliminate or noticeably reduce some errors, thereby obtaining a higher accuracy, also through the use of post-processing programs. The accuracy that may be reached, depending on the receiver kind, the standing time, the manner in which the survey is carried out, and the kind of correction being performed, will be discussed in the following paragraph.

2.4. The GPS receivers

The GPS receivers used for the surveys (measurements) are equipped with an omnidirectional antenna (integrated in the receiver itself or located outside it), an extremely accurate clock, a codes generator, a data memorisation system, and a system for carrying out partial processing. The main operations performed by them consist in the decoding of data contained in the "Navigation Message" and in the measurement of the delays of signal arrival times necessary for distance calculations. Generally, these operations are classified as follows:

- Mono frequency: They make use only of L1 and may perform both pseudorange measurements - only on the code C/A - and phase measurements on the carrier frequency (depending on the manner the survey is carried out).
- Double frequency: They employ both frequencies, L1 and L2, and perform both measurements of pseudorange - with the codes C/A and P (not encrypted) - and of phase, on both carrier frequencies (depending on the modality adopted for the survey).

| RECEIVER | SURVEY STYLE | LIMITS | SETUP + POSITIONING TIME | CORRECTION | PRECISION |
|---|---|---|---|---|---|
| | | | | | |
| DOUBLE FREQUENCE (4800) | RAPID STATIC | BASE ≤ 100 Km | ≤ 15 sec. + (8÷20 min.) ACCORDING TO THE NUMBER OF SATELLITE | YES (PHASE) | ≤ 1 cm. + 1 ppm |
| | STATIC | - | ≤15 sec. + (≥45 min.) | YES (PHASE) | ≤ 0,5 cm.+ 1 ppm |
| | REAL TIME (DIFFERENTIAL) | - | ≤ 15 sec. +(1 min.) | YES (PSEUDORANGE) | ≤ 1 mt. + 1 ppm |
| | REAL TIME (KDMEMATIC-RTK) | BASES ≤ 15 Km | ≤ 60 sec. +(1 min.) | YES (FASE) | ≤ 1 cm. + 1 ppm |

2.5. Survey styles

The following are the mostly employed survey styles during the determination of points:

- Static
- Rapid Static
- Real -Time Kinematic (shortened RTK)
- Real Time Differential (or simply, Differential)

i - Static style: This is used in applications that provide for the determination of points that will likely be used to form a frame network (e.g. the GPS network of great telecommunication company), and which therefore require to be measured with maximum accuracy. This style may involve the use of both mono-frequency and double frequency receivers. The standing time is about 60 minutes for bases distance exceeding 15 Km. This style may be performed with mono-frequency or double-frequency receivers.

ii - Rapid static style: in contrast with the preceding one, this style requires the use of only double-frequency receivers and noticeably shortens the standing times, generally comprised within 8-20 minutes, according to the visible satellites.

iii - Real time kinematic style (RTK): This survey style allows to directly determine a point "on the spot", without requiring post-processing of the survey, by making use of double-frequency receivers connected through radio modems or GSM modems, and moreover, it reaches an accuracy of centimetres. It is possible to reach said precision by solving the starting phase errors. It is used for the determination of points that must be measured during accurate surveys (e.g. a street, a land area, etc). According to this style, the standing time of the rover receiver at single points is very short (stop and go).

iv - Real time differential style: it allows to directly determine a point "on the spot", it reaches an accuracy less than one metre, as it makes use of a C/A code and does not use the phase.

2.6. Geodetic reference systems

The term 'reference system' indicates a system according to which it is possible to identify the position, in tridimensional space, of any point whatever, using a triple of coordinates. In case the reference system is a geodetic system, this position will be expressed by the triple: latitude, longitude, and altitude.

In view of the fact that the geoid (the surface which better approximates the surface defined by the average sea level) does not have a uniform pattern in the different areas of the earth, due to the different gravitational forces, the necessity arose to realise different models (that is, different reference systems) to approximate the earth surface.

Every geodetic reference system is based on an ellipsoid ('geodetic datum'), that amounts to a tridimensional mathematical model which wholly or partly corresponds to the geoid.

A geodetic system is characterised by the form and the dimension of the corresponding ellipsoid, and by the position of its centre of gravity (origin of the coordinate system's axes) with respect to the earth centre.

We remind the following kinds of 'geodetic data', on which cartography is also based, and which have been adopted inside the national territory (in order to locally approximate the earth surface), or in the rest of the world (macro-regions):

- European Datum (ED50): International Ellipsoid, Average European Orientation, First Meridian Greenwich
- North American Datum (NAD27, or NAD83)
- ROMA40: International ellipsoid, Orientation M. Mario. First Meridian M. Mario. These are supplemented by the WGS84 system, which is used as a reference in the GPS system. In contrast with the other systems of reference, its origin coincides with the gravity centre of the earth.

World Geodetic System (WGS84): geocentric system, which is stationary with respect to the earth and has its origin in its centre of mass.

Reference points: medium pole and Greenwich

Ellipsoid: geocentric and equipotential

It is supported by positioning systems making use of satellites.

2.7. Latitude and longitude of a point

It represents the pair of parameters necessary to identify each point in the utilised geodetic reference system. A survey of the latitude and longitude, performed with GPS receivers, furnishes data in the WGS84 reference system, and therefore requires a transformation into the reference system employed.

It is deemed useful to remind that at our latitudes, a second of parallel varies between 21 and 25 metres, whereas a second of meridian is a constant and equals about 31 metres.

2.8. Altitude above sea level (orthometric altitude)

As shown in Fig. 2, this parameter denotes the height (in metres) - with respect to the surface of the geoid 4 - of the point P where the survey is performed, that is, with respect to the surface which better approximates the one defined by the average surface of the seas. The determination of the altitude is not straightforward when the survey is done by means of GPS instrumentation, which provides the height hE of the measured point P with respect to the ellipsoid 5 WGS84 (to which the GPS system refers). Considering that the deviation of the geoid is not uniform along the whole surface of the earth 6 (macro areas), and knowing the value of its "waviness" N, it is possible to calculate the corresponding altitude hO above sea level. The model for the reference geoid for the Italian territory is ITALGEO2000.

3. STATE OF THE ART, THIRD PART: THE GPS NETWORKS OF THE CELLULAR (MOBILE) TELEPHONE COMPANIES.

In order to be able to take advantage of the data for the differential correction, the cellular (mobile) telephone network administrator (network management company) usually has realised a network of GPS permanent stations certified and comprised in the National Standard System IGM95. The measured data are until now used for the processing of the detected radioelectric parameters of the RBS (plano-altimetric coordinates, azimuth, height of the antenna's base) and for services intended for external professional men (Geodata Service).

The dislocation and number of these stations permits to use the sequences of differential corrections, for surveys made almost on the whole national territory. Every GPS station automatically transfers, during its normal operation, the data collected by the satellites (ordered into files according to the time of the measurement), to the personal computer to which it is connected, and moreover, also to the server for the management of these data and of the condition (status) of all stations; moreover, these data are also transferred to a localisation management platform (PGL), which can furnish the data to external professional men for the correction of topographic surveys.

The access to the data management server or to the PGL, in real- time or during post-processing, allows to download the data acquired by the GPS reference station.

The following table contains the WGS84 coordinates, the altitudes with respect to the ellipsoid, the orthometric altitudes (altitudes above sea level), and the waviness N with respect to the geoid for the GPS permanent stations cf the network managing company, that have been determined after the inclusion in the network IGM95.These coordinates correspond to those edited in the software used for the management of each permanent station, on which are calculated the differences (used for correction) with respect to the measured data.

The value of the waviness of the geoid (N), for each permanent station, may be considered reliable for the purpose of calculating the orthometric altitude of points that are subjected to a measurement within a range of 100 Km from each of these stations.

| GPS STATION | LATITUDE N (WGS 84) | LONGITUDE E (WGS 84) | ELLIPSOIDAL HEIGHT | N | ORTHOMETRIC ALTITUDE a.s.l. |
|---|---|---|---|---|---|
| | | | | | |
| ANCONA | 43° 34' 04.136" | 13° 30' 49.114" | 104.46 | 42.171 | 62.289 |
| BARI | 41° 06' 14.800" | 16° 45' 57.013" | 132.85 | 45.974 | 86.876 |
| BOLOGNA | 44° 29' 52.484" | 11° 24' 57.166" | 116.7 | 39.346 | 77.354 |
| BOLZANO | 46° 29' 44.246" | 11° 20' 21.249" | 329.28 | 49.544 | 279.731 |
| BRINDISI | 40° 37' 35.020" | 17° 55' 42.551" | 90.05 | 41.07 | 48.977 |
| CAGLIARI | 39° 14' 33.739" | 9° 05 '46.090" | 96.65 | 45.592 | 51.058 |
| CASTROVILLARI | 39° 49' 11.446" | 16° 12' 46.702" | 420.11 | 43.63 | 376.477 |
| CATANA | 37° 30' 33.263" | 15° 01' 58.18" | 201.08 | 41.509 | 159.571 |
| CATANZARO | 38° 53' 4.235" | 16° 31' 54.396" | 143.91 | 40.853 | 103.957 |
| FIRENZE | 43° 46' 13.112" | 11 ° 16' 09.004" | 118.89 | 45.419 | 73.471 |
| FOOGIA | 41° 27' 41.189" | 15°32'01.634" | 140.12 | 47.316 | 92.804 |

(continued)

| GPS STATION | LATITUDE N (WGS 84) | LONGITUDE E (WGS 84) | ELLIPSOIDAL HEIGHT | N | ORTHOMETRIC ALTITUDE a.s.l. |
|---|---|---|---|---|---|
| GENOVA | 44° 25' 41.065" | 08° 55' 16.024" | 204.7 | 45.26 | 159.44 |
| MILANO | 45° 30' 01.660" | 09° 13' 38.784" | 182.43 | 42.941 | 139.489 |
| PADOVA | 45° 24' 55.865 " | 11° 55' 50.580" | 98.89 | 44.16 | 54.73 |
| PALERMO | 38° 07' 52.222" | 13° 21' 24.042" | 71.28 | 43.467 | 27.813 |
| PERUGIA | 43° 07' 29.680" | 12° 22' 28.943" | 474.26 | 47.237 | 427.023 |
| PESCARA | 42° 26' 35.495" | 14° 11' 57.675" | 58.96 | 44.036 | 14.924 |
| ROMA | 41° 57' 22.470" | 12° 29' 08.513" | 83.74 | 48.265 | 35.475 |
| SALERNO | 40° 41' 01.316" | 14° 46' 07.892" | 117.34 | 47.479 | 69.861 |
| SASSARI | 40° 44' 10.635" | 08° 33' 27.823" | 245.69 | 47.348 | 198.342 |
| TORINO | 45° 04' 24.985" | 07° 33' 21.264" | 381.43 | 50.264 | 331.166 |
| UDINE | 46° 02' 58.849" | 13° 15' 00.724" | 160.76 | 45.049 | 115.711 |
| VERONA | 45° 26' 14.066" | 11° 03' 05.180" | 135.2 | 45.325 | 89.875 |

3.1. The localisation management package (PGL)

Concurrently with the realisation of the network that furnishes the GPS differential correction data provided by the GPS network of telecommunication companies, these latters have implemented an application package allowing, besides the collection of the above mentioned data, the access to the same by external users.

The design of the package, which is named localisation management platform (abbreviated PGL), currently provides - in the specific realisation - 23 GPS reference stations that are connected to the PGL by means of intranet, and that uninterruptedly send the collected data (for 24 hours). The transmission has an hourly periodicity for what concerns the data in the RINEX format, whereas it is continuous for the data in the RTCM format.

The PGL is constituted by a Processing Centre and an Operative Centre and is provided with two interfaces, to the Internet "world", through the protocol HTTP, and to the radio mobile GSM network. To realise its connection with the radio mobile network, the PGL is currently interconnected through dedicated fluxes of 2 Mbits/s, to the GSM network. The Processing Centre has the task to receive the data from the 23 GPS stations, both in the form of RINEX files, and as a continuous RTCM flux, and to duplicate them in case of more than one simultaneous access.

The PGL is actually sized so as to be able to store the GPS data of the last 30 days and so as to allow up to 1000 simultaneous accesses, even in case they are all related with the data of the same station.

3.2. The GeoData service of GPS data fruition, for carrying out the differential correction.

As has been already mentioned in the description of the PGL's architecture, the GPS data for the differential correction are available through the two classical access modalities already used by professional men that utilise GPS differential instrumentation, the post-processing and the real time.

I - POST-PROCESSING SERVICE

The GPS stations periodically send to the PGL the hourly files containing the data for the differential correction, which are formatted according to the international standard RINEX (Receiver independent exchange format). The GeoData service, in Post-processing, provides for the client to perform his GPS survey with the rover instrument, by recording the measurements' session. Successively, from his internet position he connects himself with the dedicated site and downloads the files that contain the GPS differential correction data. The PGL provides the list of the present files (maximum log time: 30 days) and the possibility to perform the download of the required ones, and - with an appropriate software -, to post- process the measurements taken on the field, thereby refining the accuracy of the surveys.

II - REAL TIME SERVICE

The GPS stations continuously transmit the differential correction data to the PGL, according to the international standard protocol RTCM SC-104 (Radio Technical Commission on Maritime Communication, Special Committee 104) comprised in the Release 2.1.

The GeoData Real Time service provides for the client to activate a telephone connection with the PGL, by dialling on the GSM telephone apparatus (with enabled SIM), - which is connected to the GPS rover receiver-, a radio mobile number dedicated to the relevant GPS station.

Once the connection is established, he starts with the GPS measurements and continuously receives the required data at a rate of 9.6 Kbits/s, directly effecting on the field (on the spot) the differential correction, and obtaining high accuracy surveys.

4. STATE OF THE ART, FOURTH PART: PRINCIPAL RADIO-ELECTRIC PARAMETERS

4.1. Latitude and longitude of a radiating system

Under "coordinates of a radiating system" we mean the parameters 'longitude and latitude' of the antenna's support (post and trestlework), which for the company that manages the cellular telephone network are expressed in the reference system ROMA40. This definition is valid both for the case of posts/trestles located separately from the building of the RBS, and for posts/trestles arranged above the building of the RBS (and in this second case the coordinates of the post/trestle must be determined, not those of the building itself). If the plant is new, the design coordinates must be checked after the installation of the antenna support.

4.2. Orthometric altitude above sea level of a radiating system

Under "altitude above sea level" of a radiating system, it is meant the orthometric altitude above sea level as determined at the base of the support of the system. If the support is a post or a trestlework, located on the ground, the altitude is referred to its base, if the structure comprises a building and a post, or a building and a trestle, the altitude is referred to the height relative to the perpendicular to the ground plane of a post or a trestle.

4.3. Antenna's azimuth

This indicates the pointing or "tracking" of the antenna (expressed in degrees from 0 to 359) in the horizontal plane, with respect to the geographic North - and not with respect to the magnetic one-. Its optimum value should correspond to one of the design results for cellular covering (cover). The main problem consists in obtaining an azimuth which is equal to that derived from the design calculations. The azimuth is a parameter for which the differences between the real value and the value obtained from simulations, are not easily identifiable, although its effects may also be noticeable, in particular in areas that are substantially non uniform under the point of view of the orography, and moreover these effects increase with distance.

4.4. Antenna's tilt

This parameter is the pointing or "tracking" of the antenna (in degrees), in the vertical plane, and for which the differences between the actual value, and the value obtained from simulations, are not easily identifiable, although the related effects could be relevant.

An optimum value of the antenna's tilt is one of the objects of the design, for obtaining the cellular covering. The fundamental problem is to obtain a tilting that best approximates the value derived from design calculations.

Obviously, the antenna tilt is a parameter which may render critical the accuracy of the plant's realisation; particularly, the effects may be noted in areas with very variable orography, and moreover they increase with distance.

4.5. Antenna's height

This parameter is the height of the antenna (in meters) from the ground plane evaluated according to its perpendicular, as measured at the basement for what concerns the construction embodiment, and at the electric centre for what concerns the aspects related to signal propagation (e.g. use in the tools for planning cover simulations).

## 5. FUNDAMENTAL PRINCIPLE ON WHICH THE INVENTION IS BASED

The object of the present document is to define the operative procedures that are necessary for an accurate survey of differentially correct geographical coordinates (during post-processing or in real- time), when use is made of the network of GPS permanent stations, and moreover, for the determination of the azimuth, tilt, and altitude above sea level of the antennas of radiating systems of Radio Base Stations. The topographic instrumentation of reference should not require a direct contact with the radiating elements, thereby allowing to overcome the difficulties of reaching (approaching) the antennas, that have been encountered by the staff entrusted with the check of the plants, both during the realisation of the same (e.g. tests performed on the radiating systems), and during operation (e.g. optimisation or analysis of the anomalies on the radio quality of the network). The invention is moreover useful during the check of the coordinates of plants that are yet in the design phase.

A further object of the present invention is to provide a detection or measurement method of the coordinates of the antennas of a radio base station, as well as of their azimuth and tilt, by making use of surveying technique not depending on the technological functionalities of the apparatus object of measurement.

A last object of the present invention is to provide a detection or measurement method of the coordinates of the antennas of a radio base station, as well as of their azimuth and tilt, by making use of devices, telecommunication techniques, data acquisition and data processing techniques, all of which are of a standard type, so as to obtain a detection (measurement) system of limited cost, which may be directly and broadly utilised and which allows an easy maintenance.

These and further objects which will result from the following description, are obtained by means of a method as set out in claim 1.

A fundamental instrument for putting into practice the procedures of coordinates detection, is the GPS receiver, for instance the receiver of the type LEICA SR530 or TRIMBLE 4800, that is, a double-frequency receiver suited to carry out GPS surveys of the 'static', 'rapid static', and ' kinematic' (RTK) kind.

A further important instrument for putting into practice the detection and processing procedures, is a total laser station - of the kind LEICA TCRM 1102 or TRIMBLE TTS 500 -; that is, an instrument used for topographic surveys (distances and angles), that normally ensures the cooperation with GPS receivers.

In the preferred arrangement, this station is provided with a pulse electronic distance measuring device that generates a laser beam through a lens installed on a telescope (angle range with respect to the vertical, from 47 to 317, and magnification power equal to 30, with the possibility for the operator to use it both on the keyboard side and on the opposite side). The emission of the laser beam may be controlled from the telescope station, or - otherwise- by auxiliary units of control and arrangement (such as TSC1 for TRIMBLE instrumentation), in case these units are connected, and by providing - in this second case - specific functions for the memorisation of the measurement.

The just mentioned auxiliary unit (e.g. a TSC1- Trimble Survey Controller) is a controller usually utilised both for a GPS receiver and for a conventional total laser station. The main operations it is able to carry out are: the arrangement of the survey styles, and the memorisation of the acquired data.

Only for illustrative purposes, and without limiting in any way the scope of the invention, in the following some preferred ways of carrying out the procedures of the invention will be disclosed by reference to the annexed drawings, in which:

Fig. 1 is a schematic illustration of the differential positioning system, typical of the GPS;

Fig. 2 is a representation of the various parameters on which the methods of survey are based;

Fig. 3 is a representation of some displays of the instrumentation used for the survey of accessible points;

Fig. 4 is a schematic drawing of a satellite detector;

Fig. 5 is a schematic representation of the positioning of the GPS vertexes, during a coordinate detection in case of an inaccessible point;

Fig. 6 is a transverse cross-section of an antenna;

Fig. 7 is a schematic representation of some characteristic geometric parameters of an antenna;

Fig. 8 is a schematic representation of some of the parameters on which the antenna's height measurement procedure is based;

Figs. 9-16 are illustrative representations of computer displays during the processing of the survey;

Figs. 17-22 are schematic drawings of antennas and respective detection (measurement) points.

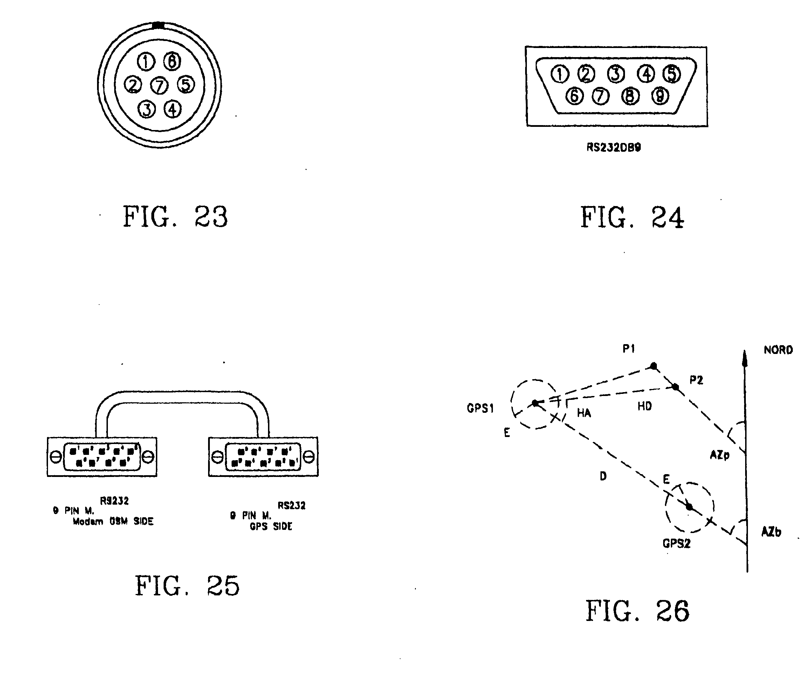

Fig. 23 is a representation of the contacts related to one of the ports (on the GPS side) employed for the interfacing of the of the instruments utilised in one embodiment of the present invention;

Fig. 24 is a schematic representation of the contacts of another port among the ports employed for the interfacing (on the modem side) of the instruments, in the same embodiment to which also Fig. 23 refers;

Fig. 25 is a representation of the pins related to an adapter involved in the interfacing of some of the instruments employed in the realisation of the present invention, to which also Figs. 23 and 24 refer;

Fig. 26 is a graph illustrating the significance of a series of parameters related to the procedures of the antenna orientation measurement, according to the present invention.

## 6. MEASUREMENT OF THE COORDINATES OF AN ACCESSIBLE POINT

In order to measure the coordinates of any point accessible by the satellite detector, e.g. the coordinates of the radiating system of a RBS (located on a post, a trestle or a building), so as to determine these coordinates (latitude, longitude and altitude above the sea level), by making use, for instance, of the GPS receiver Trimble mod. 4800, the following multiple-step procedure is adopted:

I - a point is reached which is in proximity of the support that sustains the antennas (by trying to leave all obstacles northwards), so as to carry out a survey which is indicative and representative of the reality.

Should this be impossible, that is, should it be necessary to move away by a noticeable distance, the coordinates shall be determined through a survey of a mixed kind, based on measurements acquired both by GPS instrumentation and by a detection and memorisation instrument, as explained in the next chapter.

It should be noted that the term 'coordinates of the radiating system' indicates the coordinates of the antenna support, and the altitude above sea level corresponds to that measured at the base of said support (see the chapter " Principal radio-eletric parameters").

II - After having appropriately effected the positioning of the instrumentation, before performing the first survey, the measurement instruments (detection instrument's) time is set and memorised according to the UTC hour of Greenwich (1 hour back in the winter, and 2 hours forward in the summer, with respect to the local hour). In this manner, the time that will be displayed by the detection and memorisation instrument (which can be displayed through a "Review current job"), during the surveys, will correspond to that of Greenwich. This setting will be useful during identification of the files of the Base, which must be downloaded for post-processing.

By means of an operative sequence of the kind:

Configuration → Controller → Time/date

the following parameters will be set:

```
Time/date
Timeout:        30
Time stamp: 15
24 Hour clock:       Yes
UTC time: 18:48:56
UTC - Local time offset: 1 h0m
Time type: UTC
Date format: DDMMYY
UTC date: 22/11/2001
GPS time display: Date/time
```

III - Create the survey style for the GPS receiver, on the detection and memorisation instrument (to be performed at the very first GPS survey which is effected by the satellite receiver connected to the detection and memorisation instrument). After its creation, the survey style will always be present in the menu "Survey styles", and will be available for use, among the predefined survey styles.

IV - Personalisation of the survey style. This setting of the parameters may be changed for each measurements procedure (session) according to the needs and according to an operative sequence of the following kind:

Configuration → Survey Styles → 4800 → Rover options

From which one obtains:

Rover options
Survey Type: FastStatic
Logging device: Controller
Auto file names: Yes
Logging interval: 5.0 s
Elevation mask: 13
PDOP mask: 6.0
Antenna height: ?

Type: nnnnn Internal
Meas. to: Hook using nnnn tape
Part number?

An explanation of the main parameters to be set, characterising a GPS survey style of the type fast-static, will now be given:

- Survey type: Survey style chosen for the measurement
- Logging device: Unit inside which the survey data will be stored
- Auto file names: it specifies the possibility of automatically assigning a name to the survey file, if desired. If pre-set to "Yes", it will correspond to the serial identifier of the receiver, followed by a progressive number incremented by one for each GPS point acquired in the same work project. If pre-set to "No", the wording "Logging file name" will also appear, and consequently a name will have to be assigned to a file corresponding to the measurements of each detected GPS point.
- Logging file name: Name of the file .dat to be assigned to the single GPS points that have been measured (this entry in the menu "Rover options" will appear only if the "Auto file name" is set to "No").
- Logging interval: The interval for the acquisition, by the receiver, of measurement samples within the survey session of a single GPS point.
- Elevation mask: elevation angle with respect to the horizon, below which the receiver disregards the satellites located in that zone. In fact, the radio track (path) to the satellites will be the worse the more the satellites approach the horizon (because they are more far away). The recommended value is 13.
- PDOP mask: This is a representative number for the goodness of the satellite constellation, which is "visible" by the receiver, during the measurements session.
- The PDOP will be the better the lower its value. Normally, a high PDOP (≥ 6) is related to satellites that are enclosed inside a very small visibility angle of the receiver.
- Antenna height: Height of the GPS antenna (in this phase it is not required to set a value).

V - Setting of the automatic "store" for the measurement; then, by means of an operative sequence of the type:

Configuration → Survey Styles → nnnn → FastStatic point,

a selection of the kind "YES/NO" is performed, where selecting:

- NO: After the elapse of the measurement times that are recommended by the manufacturer, the detection and memorisation instrument will not perform the automatic store operation, so that this command may be executed by the operator himself when he considers the already elapsed time sufficient for the measurements:

- YES: the detection and memorisation instrument automatically interrupts and stores the measurement data, once a sufficient time, recommended by the manufacturer, has elapsed, and depending on the visibility of the satellites. In case of particular and specific requirements, for which an accuracy higher than in the micron range is necessary, and in case the distances between the Rover and Base exceeds 30 Km, it is preferable to increase the measurements time.

Typical working conditions in this second situation are:

FastStatic point
Auto store point: Yes
L1 FastStatic times

Time for 4 SVs: 30m0s
Time for 5 SVs: 25m0s
Time for 6 + SVs: 20m0s

L1/L2 FastStatic times

Time for 4 SVs: 20m0s
Time for 5 SVs: 15m0s
Time for 6 + SVs: 8m0s

VI - Setting of the tolerance below which a measurement sample is considered a double point with respect to another one, and is therefore discarded.
The operative sequence in this case is as follows:

Configuration → Survey styles → nnnn → Duplicate point actions

With the following settings:

Duplicate point actions
Duplicate point tolerance:

Horizontal 0.020m

Vertical 0.020m

VII - Generation of a new work project (example: VITORCHIANO)
This operation will be performed before starting any measurement session (involving only GPS points, or mixed GPS/instrument for topographic survey) that concerns a single RBS.
After insertion of the new project's name, a selection is carried out for the coordinates system; by selecting "No projection/no datum".
VIII - Display of the satellites that are visible from the receiver. It is preferred to do this, both before starting with the survey, and during the measurement, by performing an operative sequence of the following kind:

Instrument → Satellites → List or Plot

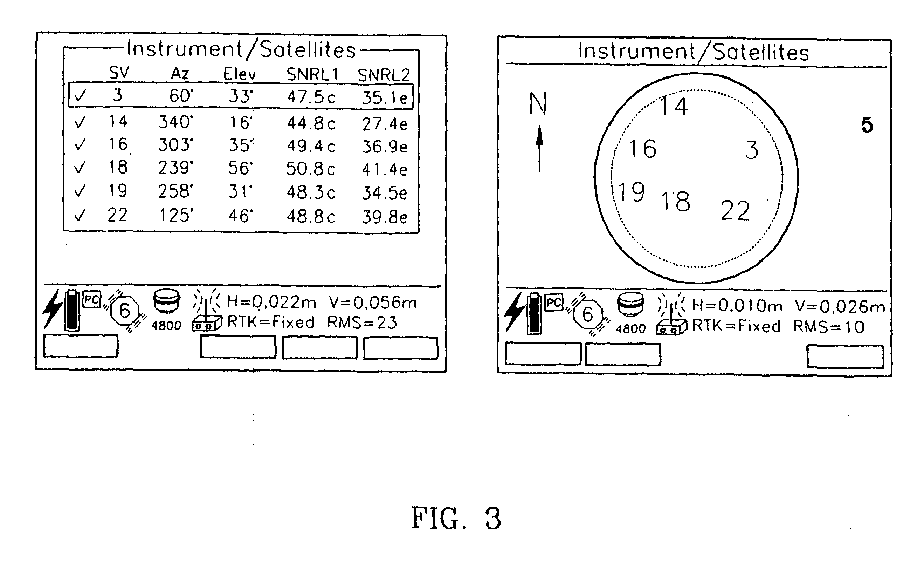

The significance of the parameters displayed according to Fig. 3, is as follows:

SV: Number that univocally identifies the satellite within the constellation.
Az: Positioning angle of the satellite with respect to the geographic North.
Elev: Elevation angle of the satellite with respect to the horizon.
SNRL1: Signal to noise ratio as measured on the frequency L1.
SNRL2: Signal to noise ratio as measured on the frequency L2.

IX - Execution of the measurement of the point
When starting a procedure of the kind 'Measure points', it will be impossible to arrive at the menu 'Measure points' if the receiver "sees" less than four satellites.
In order to display the required menu, it will be necessary to wait until this research phase is terminated, which is characterised by a waiting announcement of the following type:

- Starting survey
- Waiting for satellites

In case the receiver is already turned on and is able to see a sufficient number of satellites, then a "warning" message will appear, since the receiver has already started to acquire samples but not to download them in the detection and memorisation instrument; in this case, a message of the following kind will be displayed: "Receiver is currently logging data. Stop it?".

Then, with an affirmative reply the following is obtained:

Survey/Measure points
Point name: GPS1
Code: PUNTO GPS
Antenna Height: (TO BE MEASURED)
Meas. to: Hook using 9999 tape

The significance of the set parameters is as follows:

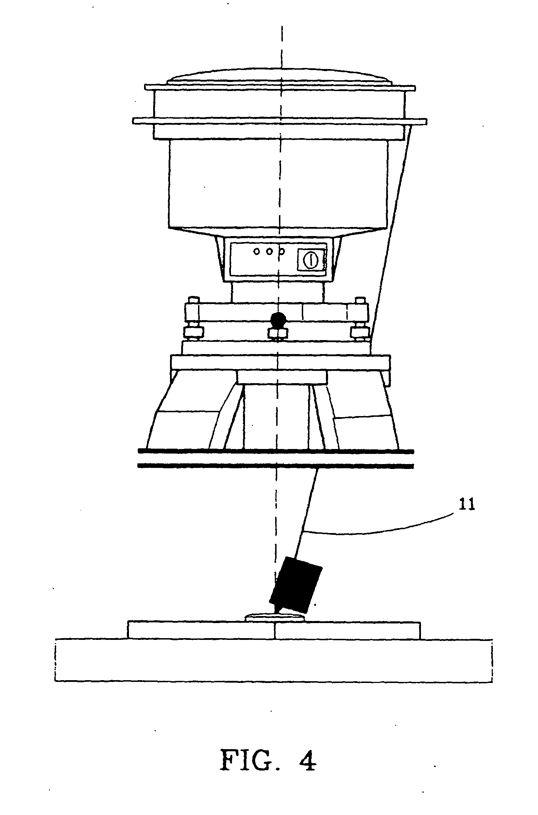

- Point name: the name it is desired to associate to the measured point. If the survey involves more points, the names must differ from each other.
- Code: A further name used to identify the individual point. In this case the "code" may also be the same for various points that are measured.
- Antenna height: the height, as measured between a survey point on the ground, and the phase centre of the antenna (a non-reachable point located inside the antenna). This height, as apparent from Fig. 4, must be measured by means of an extensible tape measure 11, by hooking the latter to one of the hooks located on the upper circumference of the antenna receiver body and by extending the tape measure diagonally up to the ground point that is identified with the viewfinder arranged on one side of the tripod.
- Meas. to: A method of measuring the height of an antenna (in our case "Hook using 4800 tape"). By its indication on the detection and memorisation instrument, and letting the operator acquire this measure, it is possible to automatically derive the real height since fixed and characteristic distances of the body antenna-receiver are already known.

Once the fields have been filled up, it will be possible to start with the survey:

→ Measure

If the "Auto store point" is set to "No", then:

→ Store

Upon termination of the measurement, it is possible to start with the measurement of the next GPS point, by renaming the fields "Point name" and - possibly - "Code". In case it is desired to terminate the survey operations, then, from the screenful "Survey/Measure points", the following action is taken:

Esc → End survey.

Otherwise, the subsequent display phase is performed.
X- Visualise the data of the just completed job:

Files → Job Management → Review current job

From this point, it is possible to proceed with the post-processing corrections of the survey, by using the dedicated software (e.g. it is possible to use the TGO - Trimble Geomatics Office -), for which we refer to the relative chapter.

7. MEASUREMENT OF THE COORDINATES OF AN INACCESSIBLE POINT

As already emphasised in the preceding chapter, if for various reasons (inaccessible point, reduced visibility of the satellites, etc.) it is impossible to perform the survey nearby the support that sustains the antennas, a mixed survey must be carried out by means of the satellite receiver and the total laser station (by leaving, if possible, the obstacles northwards, during the measure of the GPS points). It is necessary to carry out the following steps.
I - For determining the position of an inaccessible point, it is necessary to determine two mutually visible GPS points (appropriately apart from each other), which are indispensable for creating a base-line north oriented and for framing the survey.

II- The successive step (setup of the station) provides for the arrangement of the prism on one of the two GPS points, and the prism collimation performed by the laser total station, which is arranged at the other point. The prism collimation is to be considered as a "zero" reference for the instrument, both along the vertical and the horizontal planes from which deviations should be measured.

III - The third step or third phase (performed through rotation of the laser total station from the just measured "zero"), consists in the collimation of the point that is likely identifiable as the centre of the radiating system (e.g. a point at the upper end of the post or trestle, or a point on an individual antenna, in case of individual stakes that are noticeably spaced apart making therefore meaningless to speak about unique coordinates of the radiating system).

By knowing the amount of displacement of the laser total station (horizontal and vertical angles) with respect to its "zero" given on a GPS point of known coordinates, and by measuring the distance, it will also be possible to determine the coordinates of a space point.

While the coordinates of the GPS points will be determined directly in the WGS84 reference system, those of the antenna points will be determined in a local reference system whose origin coincides with one of the GPS vertexes.

IV -Thus, an appropriate software rectifies and combines the GPS measurements with the conventional ones, in order to include also the inaccessible points in the same reference system WGS84.

7.1. Survey

I - First of all, it is necessary to determine two (mutually visible) GPS points. The same steps as described in Chapter 6 will have to be followed, without forgetting to execute the procedure "End Survey" at the end of the measurement of each GPS point. The choice of the GPS points must be done in such a way that the second point is also suited to allow the positioning of the laser total station, used for the collimation of the radiating system (taking account of the height and distance of the radiating system, the amplitude range of the telescope, and the height of the operator).

II - It is necessary to intervene with regard to some installation details as:

personalisation of the focusing by sighting (aiming) any object, with prior focusing of the telescope (by rotating the external knob) and thereafter of the viewfinder (by rotating the internal knob);

moreover, in order to complete the calibration, the instrument (first the alidade and then the telescope) must be rotated as required by the special "message box" appearing on the display ("Please Rotate Alidade or Telescope"). Before taking these actions it is necessary first to make sure that the clutches on the fine displacement knobs are unlocked, and then the alidade can be rotated until the "bip" is heard, and only thereafter the telescope is rotated until the second "bip".

III - Creation of the survey style for topographic detection, on the detection and memorisation instrument (which must be performed during the very first survey using the laser total station connected to the detection and memorisation instrument). After its creation, this survey style will always be present in the menu "Survey styles".

Configuration → Survey Styles → New

Style details
Style name: 999
Style type: Conventional

IV - Personalisation of the survey style of the laser total station. This parameter setting may be modified for each measurement session according to the operator's needs:

Through an operative sequence of the type:

Configuration → Survey Styles → nnn → Instrument

the following parameters are set

|  | Instrument |  |
| --- | --- | --- |
| Manufacture: | | ► xxxxx |
| Model | | ► xxxxTTS300/500 |
| HA VA status rate: | | 1.0s |

| (continued) | |
| --- | --- |
| EDM Precision | 5mm |
| Set backsight | No |
| Instrument precisions | 5" |
| Horizontal precisions | 5" |
| Vertical angle | 5" |
| EDM (mm) | 5mm |
| EDM (ppm) | 3 |

Then, by the sequence:

Configuration → Survey Styles → nnn → Target

the parameters 'prism constant' and 'height' can be set:

- Prism constant: Depth of the target used. Set at "-30 mm." in case of a prism, and at "0 mm." if a different surface is collimated (for instance a point of an antenna).
- Height: If a prism is collimated, the height - as indicated on the centimetre scale of the telescope stake - should be indicated. During collimation a point of antenna must be brought to "zero". After selection of a survey style modality of the kind 'Laser rangefinder' and after having performed the sequence
  Configuration → Survey styles → yyyy → Topo point

an indication of the following kind will be obtained

Topo point
Measure display: HA VA SD
Auto point step size: 1
View before storage: Yes

with

- HA: Azimuth direction (Horizontal Angle).
- VA: Zenith angle (vertical Angle).
- SD: Oblique distance (Slope distance).

From here Configuration→ Survey Styles → yyyy→ Duplicate point actions will be obtained

| Duplicate point actions | |
| --- | --- |
| Duplicate point tolerance | |
| Horizontal | 0.020m |
| Vertical | 0.020m |
| F1/F2 observation tolerance: | |
| Horizontal angle | 0°00'10" |
| Vertical angle | 0°00'20" |
| Slope distance | 0.010m |

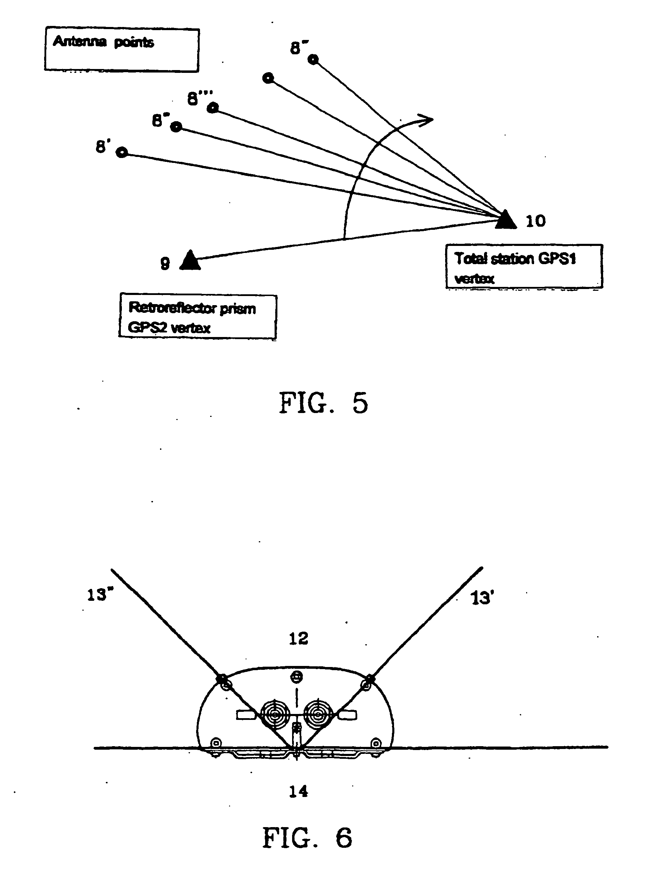

For a better understanding, reference will be made to Fig. 5, wherein 9 denotes the vertex GPS2 with back-reflecting prism, 10 denotes the vertex GPS1 with a total station, and the points on the antennas are indicated by 8', 8", ...8[n] respectively.

V - Configuration of the laser total station.

For the sake of clarity, a possible complete menu is given below, and subsequently we will illustrate the significance of the parameters to be evaluated.

- **Applications**

- Remote Height
- Remote Width
- Missing Line: Sequential
- Missing Line: Radial

- **Survey Config**

  - Setup

    - Instrument Station
    - Target
    - Environmental

      - Clear All

  - Units
  - Angle Options

    - Distance Options
    - Warnings
    - Level

- **Instrument**

  - Power Management
  - Calibration

    - Audio/LCD
    - Comm Setting

  - Languages
  - Restore Defaults

- **Information**

Through an operative sequence of the kind
Menu → Survey Config → Setup → Target
one obtains:

A- Target "Yes": If a prism is collimated. In this case also the following parameters must be specified:

- Target const: Target depth (-30 mm) if prism, "0" if different from prism.
- Target height: Prism's height, as measured from its centre, perpendicular to the ground using the extendible tape measure.
- EDM signal strength:

  i -High: In case of prisms measured at distances up to 6000 m or for different surfaces measured at distances up to 250 m.
  ii - Low: in case of prism measured at distances up to 1000 m.

B- Target "No": If surfaces other than a prism are collimated (e.g. antenna points). On the other hand, following the options
Menu → Survey Config → Units

It will be possible to make use of the settings

Angle:            Degrees

(continued)

| | |
|---|---|
| Distance: | Meters |
| Temperature: | C |
| Pressure: | mbar |

Menu → Survey Config → Angle options

| | |
|---|---|
| VA Style: | Zenith |
| Angle resolution: | 1" |

Menu → Survey Config → Distance options

| | |
|---|---|
| EDM Mode: | Single |
| EDM Precision: | 5 mm |
| Distance Display: | 0.001 |
| EDM: | Electronic Distance Measurement |

IV - Setup of the total station. It consists in the initialisation of the instrumentation station for the topographic survey (located at GPS1), by collimating the prism (located at GPS2). First the values of "prism constant" (-30) must be set on the control unit, "target" is set "YES" and "target const" (-30). "target" (HT) ( to be measured) and EDM Signal Strength (LOW) on the total station.

From the operative sequence

Survey → Survey styles → nnnn → Station set-up

a menu of the following kind is obtained:

Survey/Station set-up
Instrument point name: GPS2
Instrument height: (TO BE MEASURED)
Backsight point name: GPS 1
Backsight height: (TO BE MEASURED)
Azimuth: ?
Method: Angle and distance

The significance of the parameters whose values must be initialised will now be clarified.

- Instrument point name: The same name that was given before to the GPS point on which now stands the laser total station (for convenience the second GPS point).
- Instrument height: Height of the laser total station, as measured perpendicularly, between the sign on both sides of the instrumentation, and the ground, making use of the extensible tape measure.
- Backsight point name: the same name as previously given to the first detected GPS point on which now stands the prism.
- Backsight height: The height of the prism as showed on the centimetric scale of telescopic stake.
- Azimuth: No value is assigned
- Method: it indicates the quantities to be measured during the collimation of the prism.

Once the respective values have been entered in the fields, it will be possible to proceed with the collimation of the prism (the measure should always be started by the control unit, and not by the total station, because otherwise it would not be acquired). Then, the measurements and their memorisation are performed.

Following the station's set-up, the control unit automatically returns to the menu "Survey", in which "Measure points" must be selected ; then, it is possible to effect the measurement of the point, which will be identified as the centre of the radiating system (modifying first the values of "target" (NO) on the laser total station, "prism constant' (0) and "target height" (0) on the control unit.

If the coordinates will have to be separated, due to the fact that the cells are significantly spaced apart from each other, several points are to be measured in this case (for planning purposes it would be meaningless to speak of site centre coordinates). In this circumstance, the best survey is made by using the "Code" for identifying the cell to which the points belong, while the "Point name" will be automatically increased by 1 for each name/number that is set.

For performing the measures on the points, the following menu is used:

Survey/Measure points
Point name: P1
Code: ?
Method: →Angles and distance
Target Height: 0

During the collimation of a point, it is possible that the measurement is not effected because of one of the following reasons, for which respective "warning" messages will be provided:

- feeble signal: with indication of EDM timeout
- multiple reflections: with indication of EDM Dual-echo.

If the measurement can be carried out normally, the display will contain the respective results (values of HA, VA and SD):

VI - Correction of the survey during post-processing by means of the dedicated software described below.

8. MEASUREMENT OF THE ANTENNA AZIMUTH

The instrumentation to be provided in order to carry out the survey corresponds to that described in chapter 7.

The measurement of the antenna azimuth follows the same principle and the same procedures as described in the preceding chapter for the measurement of inaccessible points by making a "mixed" use of the GPS receiver and of the laser total station. Therefore, this survey provides for the determination, by the receiver, of at least two GPS points - appropriately apart from each other-, that will be used for the initialization of the survey. Subsequently, the station's set-up is performed by collimating the prism with the total station, the prism being arranged on the first measured GPS point and the laser total station being arranged on the second point; the latter coinciding with the point from which the collimation of the antenna points will be carried out.

However, the determination of the azimuth requires a particular care during choice of the GPS points to be measured, since both could be utilised for arranging the total station, from which the points of the radiating system are measured (obviously this depends on the eventuality that all necessary points cannot be seen from a single GPS point).

In some instances (e.g. radio towers on which the cells are disposed on three sides), it may be indispensable to stay on a third point, which in this circumstance will not necessarily be a GPS point. In fact, it will be sufficient to define it as an inaccessible point, then to remain on it with the laser total station and, executed the "Station set-up" procedure for one of the other GPS points, to perform the measuring of the antenna points. The points must necessarily be two for each azimuth to be determined, and must lie on the same horizontal plane. They could be taken on an individual antenna or on the rising section of each cell (taking account of the fact that the antennas may have in some cases a different azimuth both with respect to the rising section and with respect to each other); in case of individual stakes the points must be taken only on an individual antenna. The points to be measured (as described in the chapter 'Antenna Families') have already been identified according to the kind of antenna.

As shown in Fig. 6, the lines of sight for the collimation of points are as follows: antenna front 12, antenna side 13' and 13", and antenna back 14.

In particular, the actions to be performed for carrying out the survey are:

I- Determination of the required GPS points (the same procedure as described in chapter 6 is carried out). All "standing" points for the total station, that are necessary for the collimation of the useful antenna points, must be located appropriately apart, and moreover, each of them must be visible from at least another one of the GPS points.

II- Arrangement of the total station and performance of the "Station set-up" of the same, before the collimation of the radiating system. These two actions must be performed for all future standing (installation) points of the total station (follow the same procedure as in chapter 7).

III - Survey of all antenna points necessary for the determination of the azimuth of all cells (using the laser total station).

IV - Correction of the survey during post-processing, and calculation of the antenna azimuth by means of the dedicated software described below.

9. MEASUREMENT OF THE ANTENNA TILT

9.1. Survey

To carry out the measurement of the antenna tilt it is neither necessary to perform surveys by means of GPS instrumentation, nor to use a specific software. In fact, it is sufficient to use the total station, for the survey of two points for each antenna which lie on the same vertical plane, and relying on simple trigonometric rules (the appropriate points are considered in the chapter "Antenna Families" and their mutual distance must be as large as possible).

Suppose that P1 and P2 are respectively the first and.second point used for the measurement. The total station, after collimation of the two points, furnishes two data (that are differently named according to the software versions): dVD and dHD. These data respectively indicate the distance on the vertical plane (dVD) and on the horizontal plane (dHD) between points P1, P2 projections.

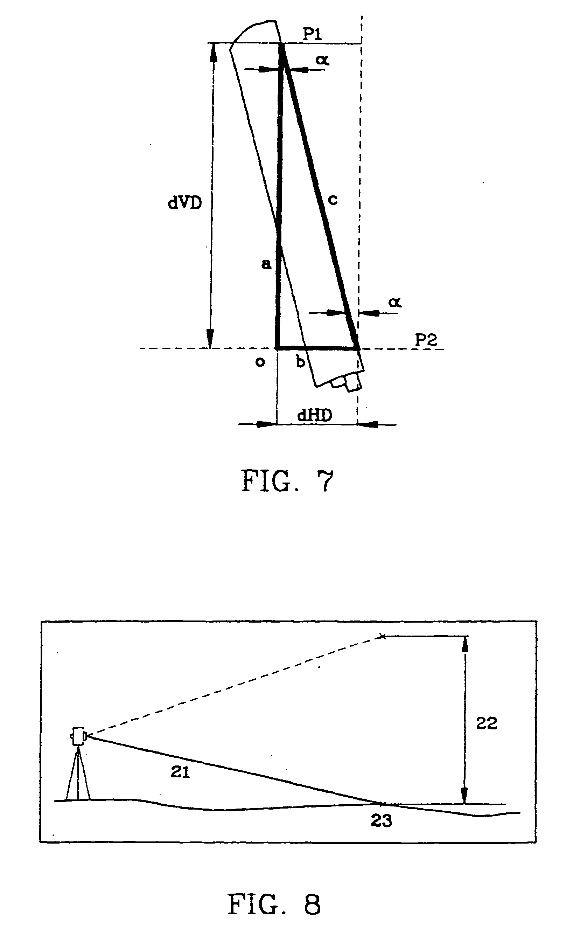

From a glance at Fig. 7 it can be noted that the right-angled triangle P1OP2 is the right-angled triangle whose cosine is represented by dVD and whose sine is represented by dHD.

Applying the following formula it is possible to derive the tilt, that is the angle $\alpha$ representing the inclination with respect of the vertical plane of our antenna:

$$\text{Tilt} = \alpha = \text{Arctg (dHD/ dVD)}.$$

First of all, the "Take First Measurement" is selected, by collimating the point P1 to be measured, using for this the viewfinder of the telescope, and improving subsequently the horizontal and vertical alignment by means of the clutch knobs located on the keyboard.

In order to carry out the measurement itself, the special procedures are activated, and the measurement is repeated in case of the occurrence of the conditions leading to a "Warning EDM timeout" (feeble signal) or "Warning EDM dual- echo" (multiple reflections).

Once a first measure has been effected, a subsequent procedure "Take Next Measurement" is initiated, during which the point P2 to be measured is collimated and the mentioned measurements are repeated.

After the measurement has been effected, the display will visualise a message of measured points, of the kind "Line 1-2". The data dHD and dVD will be those necessary for the determination of the antenna tilt. The application of the above formula allows the calculation of the antenna tilt.

The maximum acceptable tolerance in the actuation phase is 1°.

10. MEASUREMENT OF THE ANTENNA HEIGHT

In order to measure the antenna height it is not necessary to carry out surveys with the GPS instrumentation, or to use a particular software.

The instrumentation to be provided before beginning with the measurements is the same as that described in chapter 9.

In order to carry out the measure of the antenna base or antenna centre, two measurements on points must be performed, using for this the total station.

- Install and configure the total sation.
- Proceed with the measurement of the two points necessary for the determination of the antenna height (base or electric centre). Thereafter, enter a measurement modality "Missing line sequential", of the kind already used for the determination of the tilt (described in chapter 9). Then, measure - as point P1 - a point located on the ground, corresponding to the base of the antenna support (post only, trestle only, building and post, or building and trestle).

Thereafter, measure the base (of the antenna) or the centre (of the antenna) (according to the requirements), as the point P2. The value of dVD obtained after confirmation of the measurement of P2 (Line 1-2), will be the antenna height (base or electric centre, as the case may be). These operative choices are evident from Fig. 8, in which the initial point 23 is measured by the measurement 21, so that the remote height 22 is obtained by the evaluation of the observation parameter 20, which is indicated by the broken line.

11. PROCESSING OF THE SURVEY

In this chapter, the correction procedures during post-processing of the surveys will be treated; these procedures are handled by means of dedicated software, in order to obtain the coordinates like the altitude above sea level and the azimuth of the antennas (the example will concern a complete survey, but is in principle also valid for surveys of GPS points only).

11.1. Creation of the project and downloading of the Rover files

- When the relevant project is selected, the downloading will involve all data related to the GPS points (that are contained for example in files of the kind ".dat"), and also the points measured by means of the laser total station (that are often contained in a file named "DC file").

At the end of the unloading, there are provided indications for the automatic update of the projection, based on the coordinates of the GPS point and of the respective grid that may be provided by the operator- Default Projection Definition -. The values that are provided will constitute the base of default projections, eliminating the sometimes required option " Ground Coordinate System".

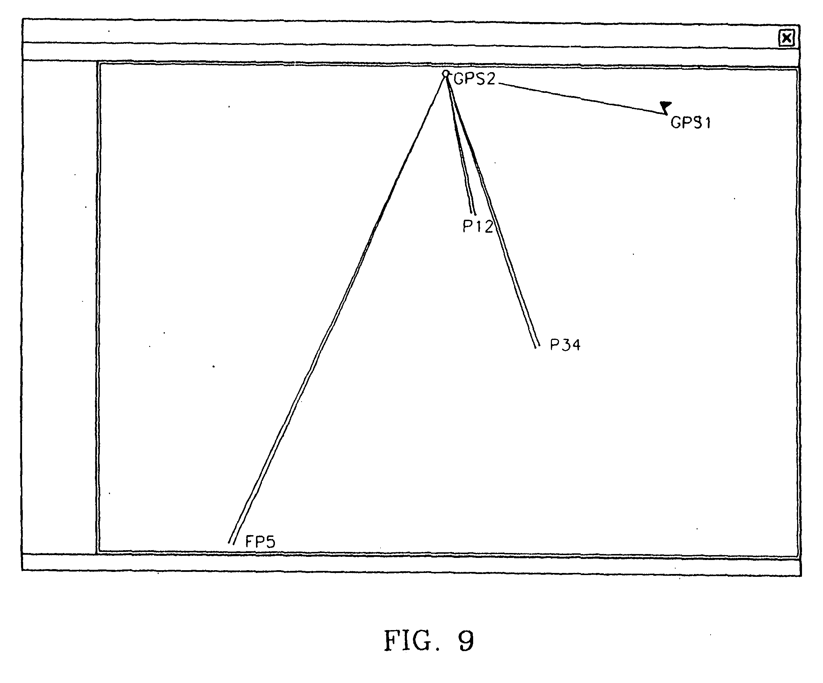

In the screenful schematically shown in Fig. 9, the point indicated by the small white circle represents the second GPS point, that is, the point from which - using the total station firts the prism and then the points on the individual antennas of each cell have been collimated.

The point with the small flag is the first GPS point, that is the point on which the station's set-up has been made by positioning the prism.

In order to better visualise the points, it is possible to use a lens, so as to magnify the relevant part. Moreover, initially the points are not associated to names; to assign names (corresponding to those that were given during the survey phase), specific operative functions may be provided:

e.g., the points are associated to cells in the following manner:

P1 - P2 = Cell 1
P3 - P4 = Cell 2
P5 - P6 = Cell 3.

For visualising the coordinates of a point (before correction), one clicks two times on the point itself, selecting a modality WGS-84. For what concerns the indicated altitude, normally the latter is an ellipsoidal altitude. A display of the following kind would be obtained:

Point name: GPS1
Latitude (WGS): 41° 57'24.65233"N
Longitude (WGS): 12° 29' 08.39780"E
Height (WGS): 83.085m
Elevation: 83.085m
Point name : GPS2
Latitude (WGS): 41°57'24.71781"N
Longitude (WGS): 12°29'07.92073"E
Height (WGS): 87.497m
Elevation: 87.497m

11.2. Download of the files of the Base from the PGL

- temporary iconisation of the program window in order to proceed to the download of the differential correction data of the permanent station, that are useful for the processing of the survey.
- Establishing a connection to the PGL service (GeoData service) by means of the dedicated internet site, with service-enabled SIM card, or alternatively, to the respective server.
- Access modality to the PGL from the internet:

http://www.yyyyy →·····
LOGIN: 335XXXXXXX
PASSWORD : XXXXXX

Upon entering in the appropriate area, the link to the GeoData service is selected, and subsequently one initially selects the macro-area within which to select the station, and thereafter the chosen station, for which it is possible to execute the download of more than one file at a time.

The sampling frequency is indicated (recommended value, 5 sec.), together with the start and end of the measurement (that is, the day, month and year, UTC hour of Greenwich, and the minutes).

- Modality of access to the server

ftp://yyy.yy.yyy/
User name : code
Password: code

- select the work directory "stations", and then the one related to the selected station (in our example we will select Roma), then the directory "rinex", and at last the one corresponding to the chosen sampling frequency (recommended value, 5 sec.).
- identify the file or files required for the correction of the survey. Each file corresponds to one hour of measurements acquired by the permanent station. The files use the following syntax: "xxAAAAMMGGyy", in which "xx"is a number identifying an individual permanent station, "AAAAMMGG" represents the year, the month, and the day to which the measures refer, whereas "yy" is the hour of the start of the measurements according to the UTC time (Greenwich), meaning one hour behind with respect to the local hour in the winter, and two hours behind in the summer. The time of file downloading is that corresponding to the local hour. By seeing again on the TSC1 the "Review current job" of our project, it is possible to obtain the hour of the survey that is periodically displayed inside it. The files that need to be outputted by the server only correspond to those which include the standing hours for the detection (survey) of GPS points only.

In the example, the survey (of 2 GPS points) lasted from about 17.16 to about 17.40 (UTC winter time), thus the 16 o'clock file (local hour) of the permanent station has been taken.

In case, voluntarily or inadvertently, other files were taken in addition to the useful ones, the software would only use the required ones, that is, only those for which between the Rover receiver and the Base receiver there existed comparable samples (according to the date and hour). From the files (in the ".zip" format), that are saved in a working directory,

| Name | Dimension | Type | Modified | |
|---|---|---|---|---|
| 172001112410.zip | 185 KB | WinZip File | 24/11/01 12.00 | |
| 172001112411.zip | 161 KB | WinZip File | 24/11/01 13.01 | |
| 172001112412.zip | 147 KB | WinZip File | 24/11/01 13.59 | |
| 172001112413.zip | 154 KB | WinZip File | 24/11/01 15.00 | |
| 172001112414.zip | 182 KB | WinZip File | 24/11/01 16.00 | |
| 172001112415.zip | 192 KB | WinZip File | 24/11/01 16.59 | |
| 172001112416.zip | 184 KB | WinZip File | 24/11/01 18.00 | |
| 172001112417.zip | 183 KB | WinZip File | 24/11/01 19.01 | |
| 172001112418.zip | 204 KB | WinZip File | 24/11/01 19.59 | |
| 172001112419.zip | 174 KB | WinZip File | 24/11/01 21.00 | |
| 172001112420.zip | 167 KB | WinZip File | 24/11/01 22.01 | |
| 172001112421.zip | 168 KB | WinZip File | 24/11/01 22.59 | |
| 172001112422.zip | 181 KB | WinZip File | 25/11/01 0.00 | |
| 172001112423.zip | 373 KB | WinZip File | 25/11/01 1.59 | |
| 172001112501.zip | 152 KB | WinZip File | 25/11/01 3.00 | |
| 172001112502.zip | 164 KB | WinZip File | 25/11/01 4.01 | |
| 172001112503.zip | 170 KB | WinZip File | 25/11/01 4.59 | |
| 172001112504.zip | 165 KB | WinZip File | 25/11/01 6.00 | |
| 172001112505.zip | 181 KB | WinZip File | 25/11/01 7.01 | |
| 172001112506.zip | 182 KB | WinZip File | 25/11/01 7.59 | |
| 172001112507.zip | 175 KB | WinZip File | 25/11/01 9.00 | |
| 172001112508.zip | 157 KB | WinZip File | 25/11/01 9.59 | |

(continued)

| Name | Dimension | Type | Modified | |
|------|-----------|------|----------|--|
| 172001112509.zip | 151 KB | WinZip File | 25/11/01 11.00 | |
| 172001112510.zip | 183 KB | WinZip File | 25/11/01 12.01 | |
| 172001112511.zip | 158 KB | WinZip File | 25/11/01 12.59 | |
| 172001112512.zip | 157 KB | WinZip File | 25/11/01 14.00 | |
| 172001112513.zip | 175 KB | WinZip File | 25/11/01 15.01 | |
| 172001112514.zip | 182 KB | WinZip File | 25/11/01 16.00 | |
| 172001112515.zip | 191 KB | WinZip File | 25/11/01 17.01 | |
| 172001112516.zip | 184 KB | WinZip File | 25/11/01 17.59 | |
| 172001112517.zip | 172 KB | WinZip File | 25/11/01 19.00 | |
| 172001112518.zip | 187 KB | WinZip File | 25/11/01 19.59 | |
| 172001112519.zip | 175 KB | WinZip File | 25/11/01 21.00 | |

it will be possible to obtain - by unzipping of each ".zip" format - 3 derivatives (with extensions .met, .nav, and obs), but only the file .obs (containing the correction data) is useful for the survey.

| Name | Dimension | Type | Modified | |
|------|-----------|------|----------|--|
| 172001112414.met | 1 KB | File MET | 24/11/01 15.00 | |
| 172001112414.nav | 23 KB | File NAV | 24/11/01 15.00 | |
| 172001112414.obs | 502 KB | File OBS | 24/11/01 15.00 | |
| 172001112415.met | 1 KB | File MET | 24/11/01 16.00 | |
| 172001112415.nav | 18 KB | File NAV | 24/11/01 16.00 | |
| 172001112415.obs | 527 KB | File OBS | 24/11/01 16.00 | |
| 172001112416.met | 1 KB | File MET | 24/11/01 17.00 | |
| 172001112416.nav | 24 KB | File NAV | 24/11/01 17.00 | |
| 172001112416.obs | 500 KB | File OBS | 24/11/01 17.00 | |

When one or more measurements files of the Rover lie "astride" two consecutive measurements files of the Base (see example in the figure), in the sense of their temporal occupation, two distinct baselines are calculated, corresponding to the single GPS point (the one lying astride). In this case, when performing the operation "Process GPS Baselines", no correction is effected. Therefore, it will be necessary to join the two relevant files of the Base, thereby obtaining a single file, and to subject the survey to a new processing. For this operation it is possible to use the command or instruction "copy" of DOS. It will be necessary to separately add the files with the same extension (.met, .nav, .obs), leaving them in the same directory.

```
Copy/b File1.met+File2.met=OutFile.met
Copy/b Fllel.nav+File2.nav=OutFile.nav
Copy/b Filet.obs+File2.obs=OutFile.obs
```

• Import inside the program TGO the files downloaded from the PGL or the server (possibly the added ones). In order to avoid problems during this phase, always check that the 3 files (.met, .nav, .obs) related to the same hour of measurements, always remain within the same working directory.

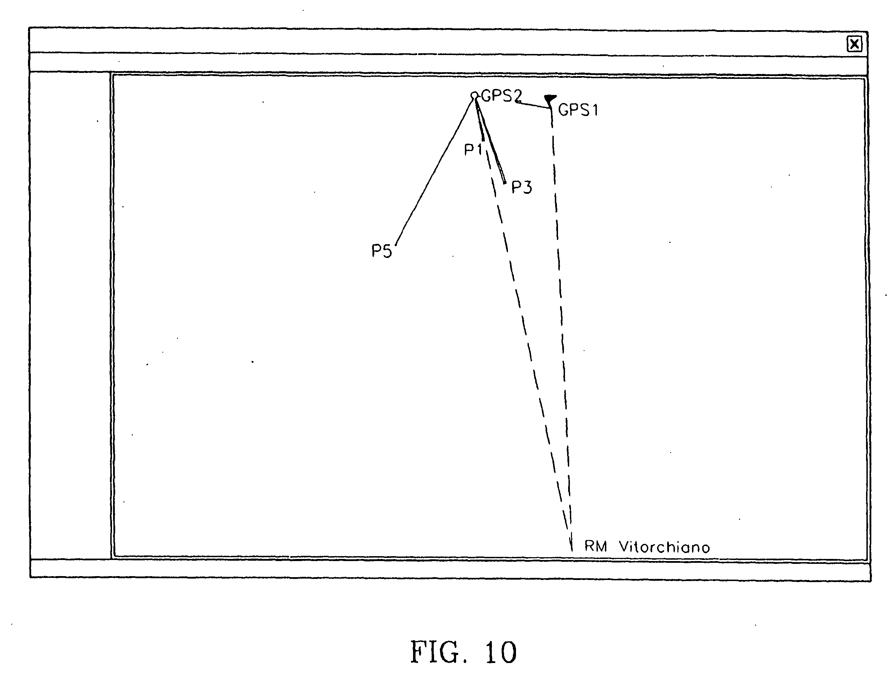

As previously decried by operating only on the files ".obs", all three files are opened simultaneously, and a check is made that each file relates to the whole hour of measurement. After termination of the files import operation, the permanent station will be displayed on the screen, as shown in Fig. 10.

By operating on the lower point, which identifies the permanent station, the known coordinates and the known altitude are visualised (edited inside the management program).

While the permanent station is performing the measurements in an interval of 24 hours, it is able to recognise, at each instant of time, the deviation of these coordinates from those of the measured samples, having at its disposal the edited reference coordinates.

The corresponding values could be of the following type:

Point name: RM Vitorchiano
Latitude (WGS): 41°57'22.47000'N
Longitude (WGS): 12°29'08.51300"E
Height (WGS): 83.630m
Elevation: 83.630m

VIII - After having selected the whole survey on the screen, the process of the baseline is performed by means of the mouse.

| ID | From Station | To Station | Baseline Length | Solution type | Ratio | Refvar | RMS |
|----|----|----|----|----|----|----|----|
| B2 | RM Vitorchiano | GPS2 | 69,649m | L1 fixed | 20,9 | 1,473 | 0,004 |
| B1 | RM Vitorchiano | GPS1 | 65,728m | L1 fixed | 37,2 | 1,332 | 0,004 |

which shows on the screen all the data regarding the two baselines.

B1: Base line RM Vitorchiano - GPS1
B2 base line RM Vitorchiano - GPS2
Baseline length : length of the baseline (GPS point - permanent station).
Solution type: Fixed Baseline (it does not mean that the points have been corrected):

- L1 fixed: successful with baseline below 5000 m
- L1 float: unsuccessful conclusion with baseline below 5000 m
- L1 iono free fixed : successful conclusion with baseline above 5000 m
- L1 iono free float: unsuccessful conclusion with base line above 5000 m

Ratio: ≥ 3
Refvar: ≥ 2 and ≤ 10
RMS: ≤ as low as possible

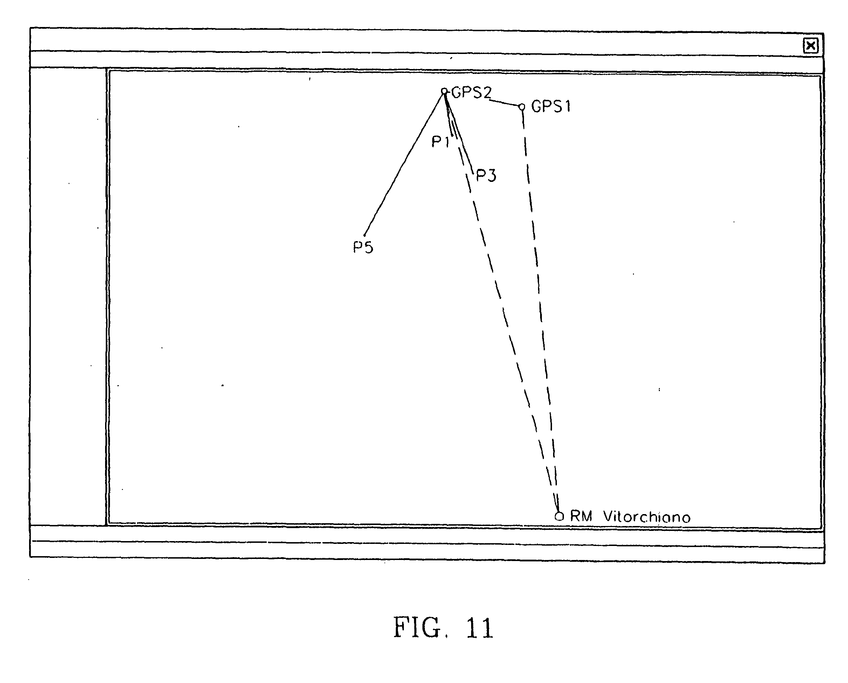

After the processing of the baselines, the correct survey will be obtained as schematically shown in Fig. 11.
IX - At this point it is checked whether the coordinates and the altitude of the GPS points have changed after r correction, as it should be, and then the azimuth is determined (in the opposite case the satellite behaviour is analysed, as described in the following paragraph).
The obtained reference coordinates are:

Point name: GPS1
Latitude (WGS): 41°57'24.58829"N
Longitude (WGS): 12°29'08.28593"E
Height (WGS): 79.022m
Elevation: 79.022m
Point name: GPS2
Latitude (WGS): 41 °57'24.66061"N
Longitude (WGS):12°29'07.80983"E
Height (WGS): 79.096m
Elevation: 79.096m

11.3. Survey analysis

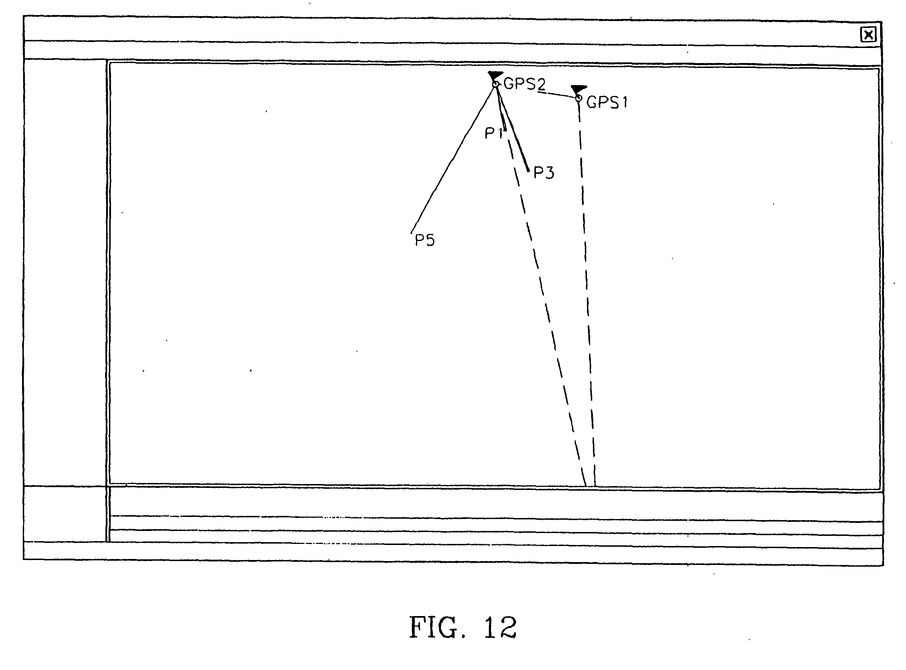

There are provided the following operative steps:
I - Analysis of satellite behaviour during the survey, both on the Base and on the Rover
A modality of the timeline kind is chosen, which - as indicated in Fig. 12 - shows:

- On a first row, the occupation times of the Base receiver (only the time interval related to the measurement files imported from the permanent station).
- On a second row, the occupation times of the Rover receiver (that are obviously comparable wholly or in part with the occupation times of the base).

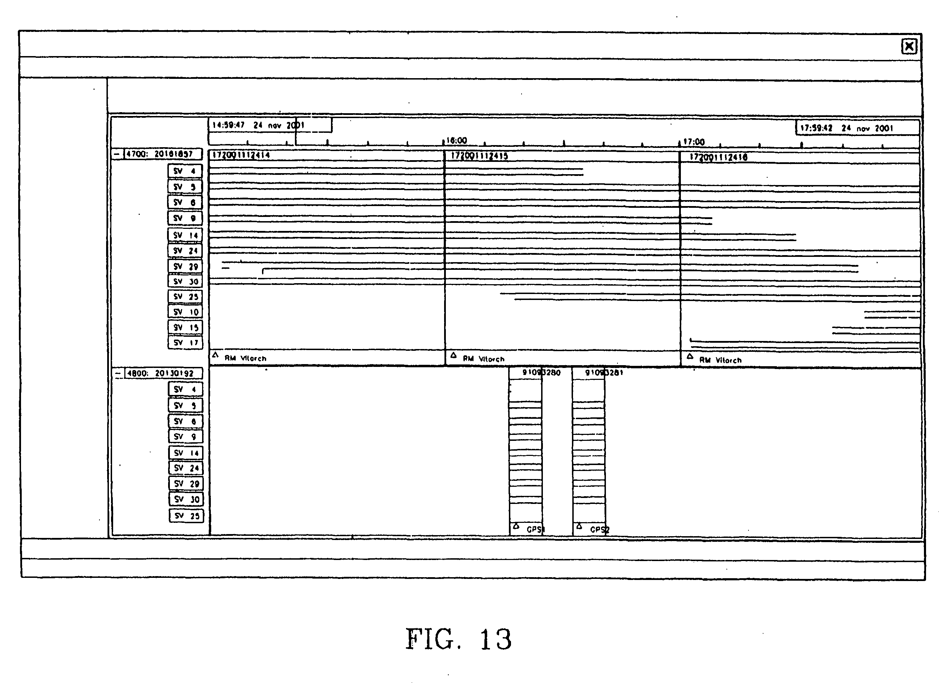

II - Visualise the presence of the satellites. Actuate the zoom to a sufficient extent to visualise all satellites that can be separately seen from the Base and the Rover (within their own measurement periods), as shown in Fig. 13. If the survey's correction has not lead to a satisfactory conclusion (coordinates and altitude unchanged after processing of the baseline), a reason for this could be the anomalies related to some parameters of the radio path and/or the position of some satellite.

In order to observe the behaviour of the parameters of a satellite (Base's side or Rover's side) during the survey of a GPS point, the corresponding radio path is selected on the time line (in the column relative to the relevant file ".dat"). By selecting the number of the satellite (SV) to be checked, a modality is obtained that allows to choose and visualise the behaviour of the various parameters. The parameters must be selected one at a time, by always closing the last one that has been opened, because otherwise the graphs are superimposed.

III - Disabling of the satellites that presented problems.

Select - on the timeline - the radio path to be disregarded for the purpose of processing the baseline (in the column of the relevant file ".dat"). Select the number of the corresponding satellite (SV), and eliminate its contribution (Enable/Disable option):

IV - New processing of the survey by reselecting, for instance, with the mouse

V - Check again if the coordinates and the altitude of the GPS points have changed after the correction.

When a measurement file of the Rover is astride two consecutive measurement files of the Base, the latter files may be united by means of a simple DOS command, thereby creating a single file:

copy/b xxAAAAMMGGyy.dat + xxAAAAMMGGyy.dat = file

VI - Possible reprocessing of the survey

11.4. Determination of the coordinates of the radiating system

In order to visualise the coordinates of the radiating system (in WGS84), the point representing the centre of this system (that has been measured during the survey) is selected, or else a point of an antenna, in case the cells coordinates must be separated; then, the modality WGS- 84 is chosen.

A sequence of data of the following kind is obtained:

Point name : P1
Latitude (WGS): 41°57'24.43670"N
Longitude (WGS): 12°29'07.85671"E
Height (WGS): 84.701m
Elevation: 84.701m

These coordinates in WGS84, obtained in the preceding manner, must be transformed into coordinates ROMA40 in order to be comparable with the data base that uses them. This transformation can be carried out using a program (that makes use of suitable transformation algorithms), and which is normally employed by those who deal with frequency planning and management.

11.5. Error calculation in existing coordinates

Due to the necessity of checking possible misalignments between - on the one hand-, the coordinates which have been measured and which have been differentially corrected by the operator, and - on the other -, the coordinates that were known before the survey, by making use of the survey processing software it is possible to calculate their deviation (in metres). By selecting the point insertion function, a modality is obtained which, after selection of the modality WGS84, allows to assign a name to the point, and to insert the coordinates and altitude (for instance the project coordinates in ROMA 40) transformed in WGS84 by means of the same program mentioned in paragraph 11.4. This gives the following series of parameters:

Latitude (WGS): 41°57'25.04000"N
Longitude (WGS): 12°29'09.96000"E
Height (WGS): 33.000m
Elevation: ?

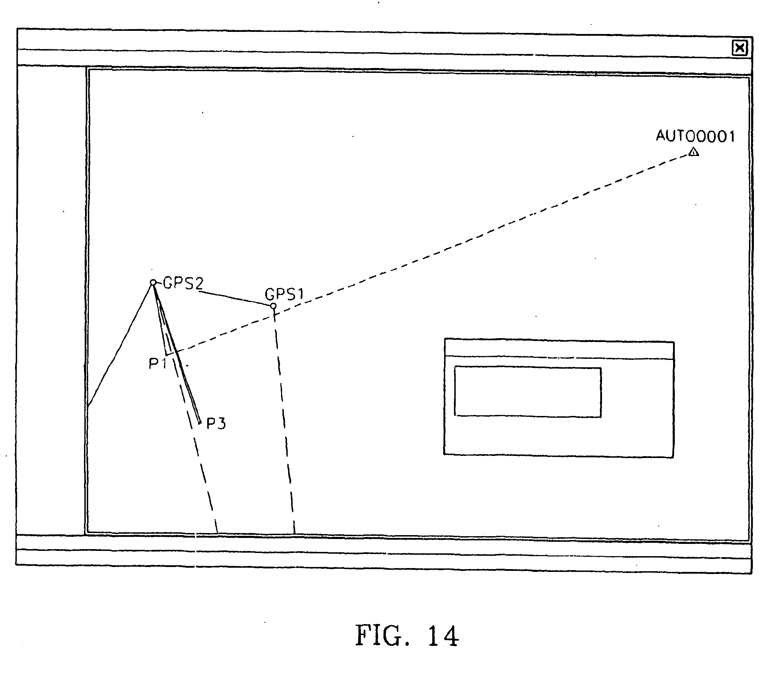

The point that represents the hypothetical project coordinates, is inserted in the context of the survey performed by the operator. Therefore, it will be possible to measure the deviation between the two coordinates, referring to Fig. 14, by adopting the same method described in paragraph 11.7, and using the following parameters:

Azimuth (Grid): 68°58'44"
Distance (Ellipsoid): 51.891m
Area (Ellipsoid): ?

11.6. Determination of the altitude above sea level, of the radiating system

I - It must be taken account of the fact, that as concerns the altitude above sea level of a radiating system, the orthometric altitude is intended, as measured at the base of its support.

If the support is a post or a trestle on the ground, this means at its base, if the relevant support is a building and post, or a building and a trestle, this means at the building's base. Remembering that the orthometric altitude can be derived by knowing the ellipsoidic altitude and the waviness of the geoid, and that the waviness of the geoid on the permanent station (see table at page 11) can likely be considered valid also for the detected point (within 100 Km.), the following is obtained:

Ellipsoidic altitude (WGS84) - Waviness of the geoid = altitude above sea level

In case, as in the exemplified site, the altitude above sea level corresponds to a point taken at the base of the antenna, the above formula becomes:

Ellipsoidic altitude (WGS84) - Waviness of the geoid - Height of the support = Altitude above sea level.

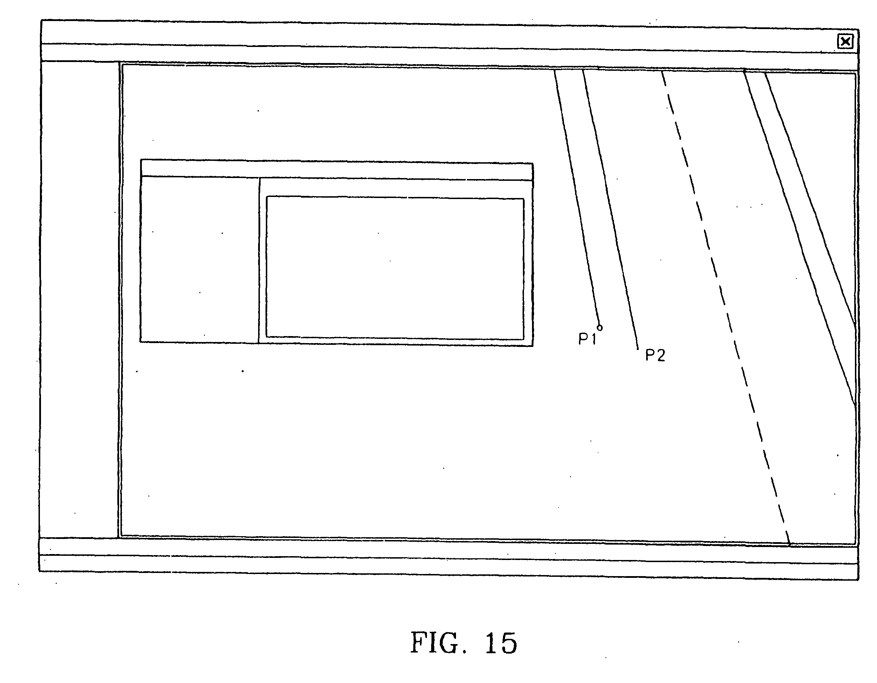

As clearly shown in Fig. 15, whose reference data are respectively:

Point name: P1
Latftude-(WGS): 41°57'24.43670"N
Longitude (WGS): 12°29'07.85671"E
Height (WGS): 84.701 m
Elevation: 84.701m

11.7. Determination of the antenna azimuth

The described process for a specific cell is to be repeated for the other cells.

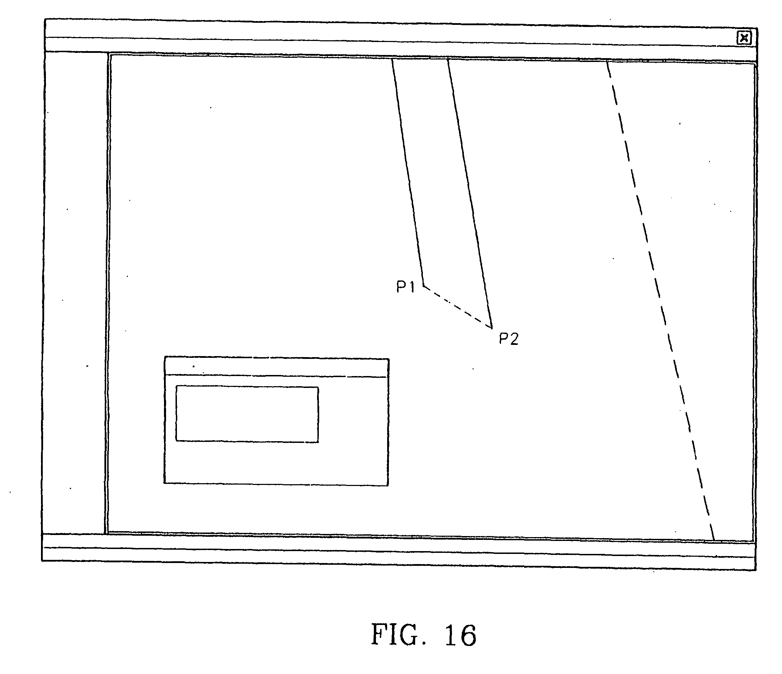

Position the pointer on the point P1 and draw a straight line starting at P1 and ending at P2, as shown in Fig. 16 (it is customary to draw the straight line by starting always from the point located on the left with respect to the other). The proposed window displays an azimuth and a distance between the two points, corresponding to the following values:

Azimuth (Grid): 119°43'50"
Distance (Ellipsoid): 0.195m

The visualised azimuth will not be that of the antenna, but the angle (measured clockwise) between the geographic North (always corresponding to the upper part of the screen), and the vector represented by the drawn straight line. In order to obtain the antenna azimuth, 90° will be added or subtracted, depending on the direction towards which the antenna is directed with respect to the geographic North (taking also account of our point of observation with respect to the antenna).

In the example shown in the figure, the angle measured between the geographic North and the vector P1-P2, equals 119°; therefore, to obtain the antenna azimuth it is necessary to subtract 90°.

If the straight line were drawn starting from P2 (that is from the rightmost point), the value of the azimuth indicated in the window would have been that between the geographic North and the vector P2-P1 (that is, 299°). In this case, in order to obtain the antenna azimuth, 90° must be added.

To give an idea.about the effect of the correction of the GPS points on the determination of the azimuth, the values related to the three cells, measured in the survey of the example, are given below:

Azimuth (without correction): C1= 28

C2 = 154

C3 = 201

Azimuth (with correction) : C1 = 29 (119 - 90 as in the exemplified figure)

C2 = 155

C3 = 203

12. ANTENNA FAMILIES (POINTS TO BE COLLIMATED)

From an analysis of the antennas which are present on the territory, it has been noted that the points necessary for the determination of the azimuth and the tilt, are not the same for all typologies. This implies the measurement method must be optimised according to antenna groups.

The identified antenna families have been created by examining the radio-electric data in a certain period.

In the following description, the points to be measured will be indicated for each antenna family, in order to carry out the calculation of the azimuth and tilt, and depending on the position of the operator with respect to the same.

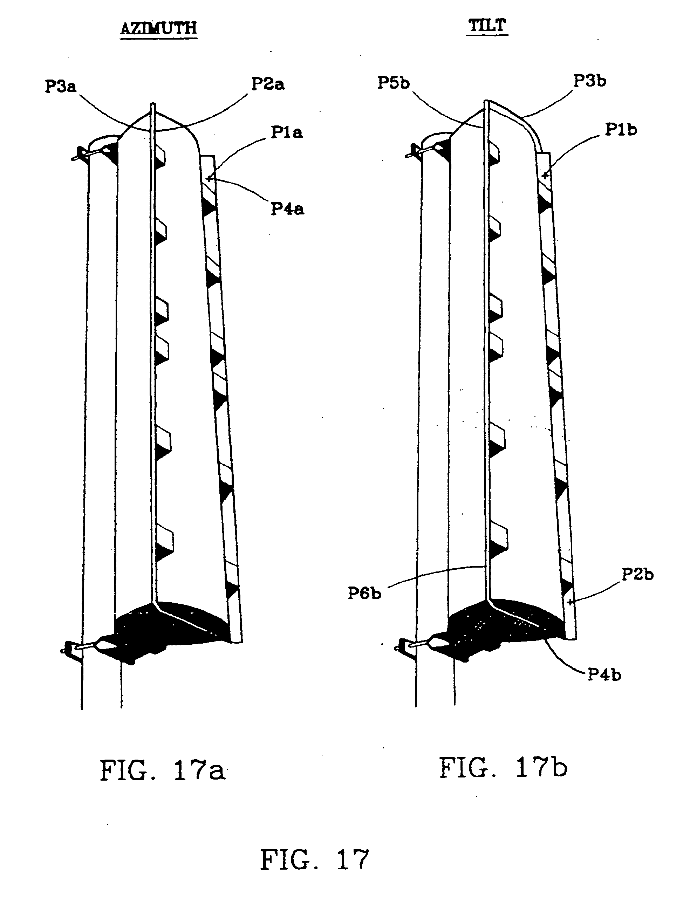

ANTENNAS OF THE KIND SIRA "ETEL 05"(see Figures 17a and 17b).

Azimuth: Antenna Front and Antenna Side: - Measure the points P1 a and P2a, or P3a and P4a.

Antenna Back: - Measure the points P3a and P4a.

Tilt: Antenna Front and Antenna Side: - measure the points P1b and P2b, or P3b and P4b.

Antenna Back: - measure the points P5b and P6b.

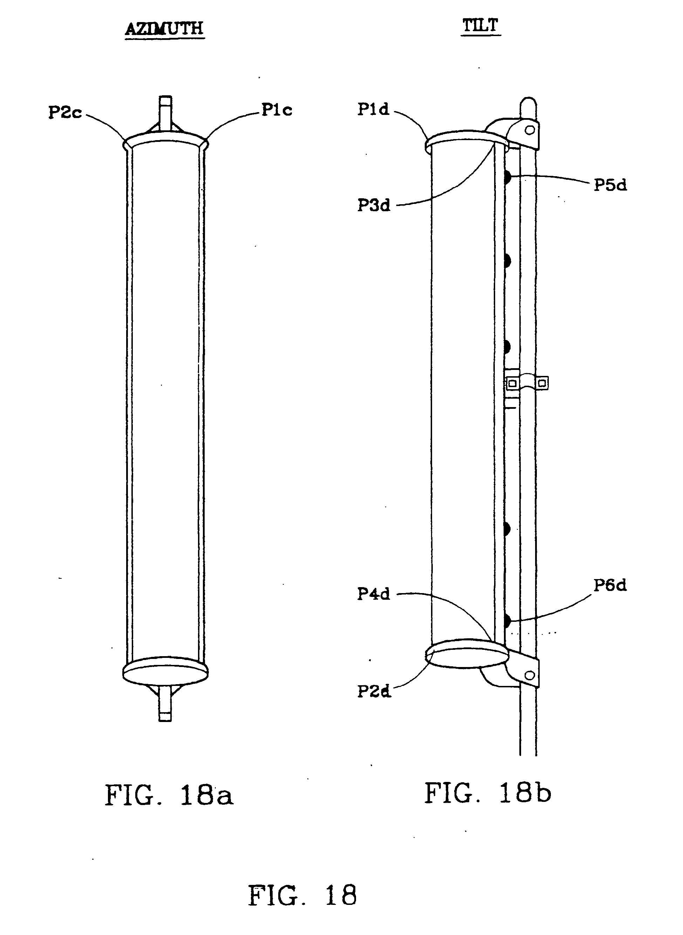

ANTENNAS OF THE KIND KATHREIN, "CYLINDRICAL" (see Figures 18a and 18b).

Azimuth: Front, Side and Back of the antenna: - measure the points P1c and P2c

Tilt: Antenna Front: - measure the points P1d and P2d

Side and back of the antenna: - measure the points P3d and P4d, or the points P5d and P6d

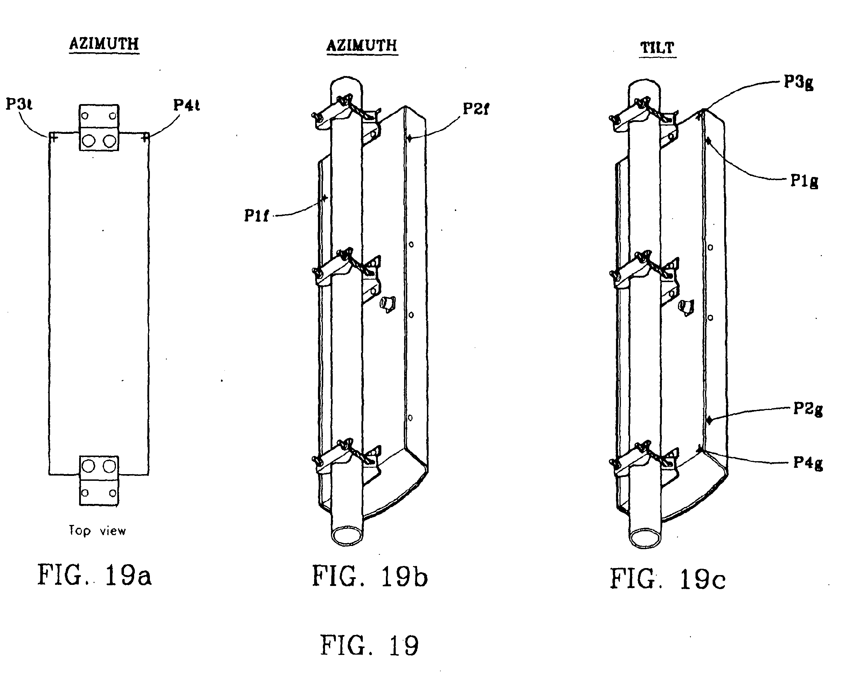

ANTENNAS OF THE KIND KATHREIN "EUROCELL PANELS" (Figures 19a-19b-19c)

Azimuth: Antenna Side :- measure the points P1 e and P2e

Antenna Back: - measure the points P3e and P4e

Tilt: Antenna Side: - measure the points P1g and P2g

Antenna Back: - measure the points P3g and P4g

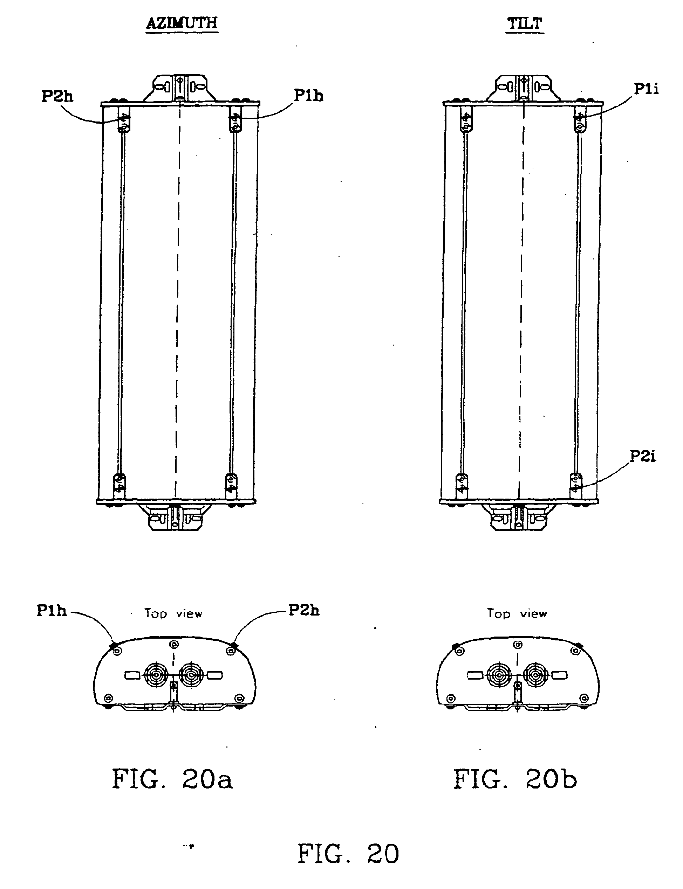

ANTENNAS OF THE KIND KATHREIN "A-PANELS" (Figures 20a-20b)

Azimuth: Antenna Front and Antenna Side: - measure the points P1 h and P2h.

Tilt: Front and Side of the antenna: - measure the points P1i and P2i.

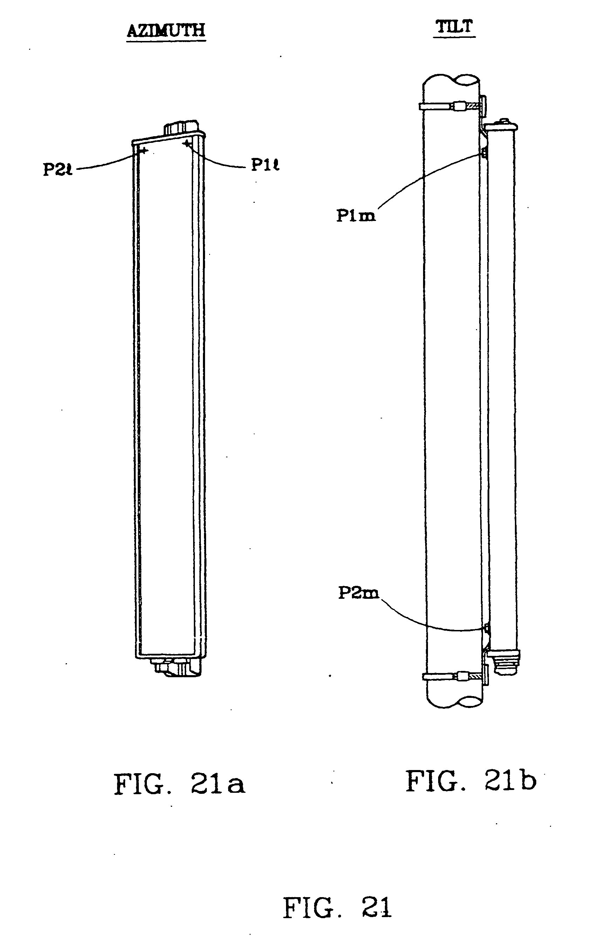

ANTENNAS OF THE KIND KATHREIN "F- PANELS" (X POL. 65) Figs. 21 a-21b

Azimuth: Antenna Front: - measure the points P11 and P21

Tilt: Side and Back of the antenna: - measure the points P1m and P2m

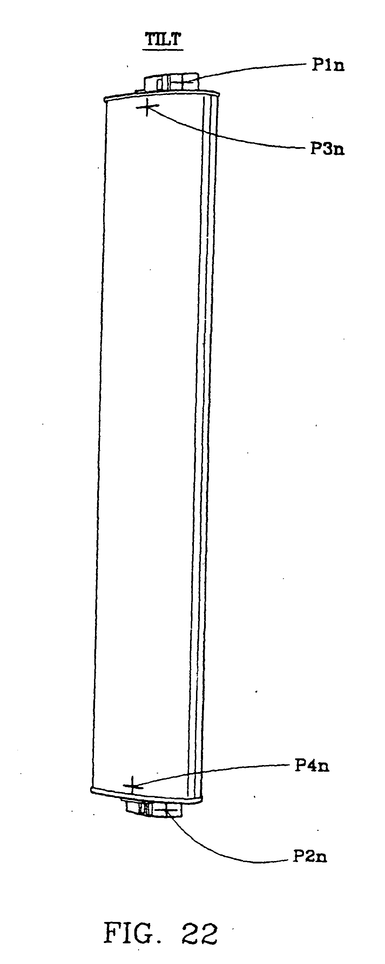

ANTENNAS OF THE KIND KATHREIN "F-PANELS" (V. POL. 65) Figure 22 Tilt: Antenna Front: - measure the points P1n and P2n, or P3n and P4n

## 13. OPERATIVE PROCEDURES FOR THE SURVEY OF COORDINATES USING REAL-TIME CORRECTION

13.1 Introduction

The fundamental operations to be carried out in order to perform real-time surveys by means of the satellite receiver, are essentially those outlined for the measurements of the static kind, that is:

- configuration of the GPS station;
- creation of the survey style;
- start of the survey and data collection.

The memorised coordinates do not require post-processing, since they are already correct at the time they are acquired. In what follows, a description is made of the hardware components required for the measurement to be carried out, by outlining their modality of use and principal commands (instructions) for the execution of the steps of the preceding points.

13.2 Preferred realisation of the measurement procedure

13.2.1 Configuration of the GPS station

The kit used in the real-time survey, for the interconnection of the basic units (satellite receiver, laser total station and control unit) is basically formed by the following connection units:

- Cable part number 33914 for the connection between GPS receiver and the external battery;
- Connection cable between standard ports LEMO-RS232;
- Cable Part Number 31288 for the connection between the control unit and the GPS receiver;
- DB9 male/male adapter, standard RS232 inverter
- Cellular phone (for instance SIEMENS ME45)
- Data transmission cable for cellular phone
- SIM enabled to a service for the furnishing of GPS differential correction data, like the GEODATA service

The preliminary step in the determination of geographical coordinates consists in positioning oneself at a point which is the most significant for the chosen locality; if the aim of the operator is that of "geo-referencing" a radiating system, this point is chosen in proximity of the base of the support of the system itself.

With the GPS receiver equipped with three serial ports, it is necessary;

- to connect the dedicated port to the control unit by means of the cable Part Numb. 31288;
- to connect the special power supply port to the external battery, via the cable Part Numb. 33914;
- to connect the last port to a radio device suited to receive the correction data transmitted by a base reference station.

The radio device may comprise:

- a radio modem (such as TRIMBLE TRIMTA 450)
- a GSM modem (such as FALCOM A2D)
- a GSM cellular phone (such as SIEMENS ME45)

The first case is of no interest, since it presumes that data are continuously transmitted from the reference station on an appropriate frequency, without requiring a service request.

By using a GSM modem or cellular phone, it is possible to perform the real-time differential correction by means of a data request (data call) or me radio mobile network.

After identification of the user and check of its authorisation to the use of the service, the data flux will be provided to him by the server of a network of the PGL kind (Localisation management package).

The data of the GPS network with a specified number of reference stations being distributed on the whole territory, are conveyed to the PGL service; the obtained information will be used for real-time corrections.

The survey procedure is the same, both for the modem and the cellular phone, the only difference being their connection modality to the satellite receiver.

Irrespective of the kind of radio device used, it is however necessary to insert a SIM card enabled for the service of furnishing GPS differential correction data.

The GSM MODEM (of the type FALCOM A2D) is connected to the GPS receiver by means of a special cable, having the following features:

- a standard connector of the serial kind RS232
- a standard circular connector (jack) LEMO 7 Pin
- a standard connector of the kind used for telephone apparatus, RJ11

In the following, referring also to Figs. 1 and 2 respectively, an explanation will be given of the arrangement and the functionality of the contacts of the standard port LEMO -which is present on the GPS receiver - and of the standard port RS232 - located on the GSM Modem-.

**Port 3 Pinout Function**

1. Signal ground
2. Power Out RTN (-)
3. Serial data out (TXD3)
4. RTS3
5. CTS3
6. Power Out (+)
7. Serial data in (RXD3)

**Signal Name**

1. DATA CARRIER DETECT
2. RXDA (in)
3. TXDA (out)
4. DATA TERMINAL READY

5. Ground
6. DATA SET READY
7. RTSA (out)
8. CTSA (in)
9. RING INDICATOR

The cable will allow to connect the PINs corresponding to homologous signals (TX, RX, Signal GND, RTS and CTS) on connectors with different standard.

In order to be able to supply the GSM Modem without resorting to an external supply, in the cable there are realised two wire connections for connecting the supply voltage +12V and its reference GND, (PIN6 and PIN2 of the LEMO connector on the GPS side)respectively with PIN1 and PIN4 of the port RJ11 of the Modem.

This connection is realised by means of a jack of the kind of a telephone pair. When use is made of this device, before inserting the SIM card it is necessary to exclude the PIN request.

In the particular case a SIEMENS ME45 cellular phone is being used for performing the correction of the survey in real-time, the telephone itself must be connected to the receiver, making use of:

- a data transmission cable RS232, associated to the cellular phone;
- a connection cable between standard ports LEMO-RS232;
- a standard adapter DB9 RS232 (Male-Male).

The adapter is used to connect, in the inverting modality, the signals TX, RX, Signal GND, of a classical data transmission, on standard ports RS232. The scheme of connections "Pin to Pin" is illustrated in Fig. 3.

The symbol "A" denotes the standard male connector RS232 9 PIN located on the GSM modem side, whereas the symbol "B" has been used to indicate the standard male connector RS232 9 PIN on the GPS side. The connections of the PINs are as follows:

PIN 5 (GPS side) -PIN 5 (GSM side)
PIN 3 (GPS side) -PIN 2 (GSM side)
PIN 2 (GPS side) -PIN 3 (GSM side)
PIN 1,4,6,7,8,9 (GPS side) → unconnected

13.2.2 Creation and configuration of the survey style

The configuration parameters of the used instrument are fundamentally linked to the creation of a new survey style and to the choice of the radio channel on which to receive the RTCM data flux.

The procedures for the modality "RT differential" are in all similar to what has been already described in relation to the surveys in post-processing, and they will not be considered for the sake of brevity.

Some slight difference exists only with respect to the choice of the operative constants in the following two disclosed procedures

SURVEY → 4800RTCM → TOPO POINT

<u>Topo point</u>

| | |
|---|---|
| Auto point step size | 1 |
| Quality control | ►QC 1 |
| Auto store point | ►Yes |
| | |
| Occupation time | Om30 |
| Number of measurements | 30 |
| Horizontal precision | 1.000 m |
| Vertical precision | 1.000 m |

In the menu which appears it is possible to select the number of points that will be averaged in order to obtain the final measure. The fields on which we can act are "Occupation time" and "Number of measurements". The geographical coordinates will be derived from the mean value of as many positions as are specified, and which are acquired in a time interval defined by the occupation time. We may think of setting the values in the fields, in the following manner:

"Occupation time" →30 sec
"Number of measurements" →30 sec

The instrument, with the set survey style, ensures a sub-metric precision. To ensure an even greater precision for the survey, it is possible to average a greater number of positions (we suggested about 30 positions, but if the observation time is extended it is also possible to vary the number of measurements at the same time, the ratio time/measurements remaining unaffected and equal to 1).

The fields "Horizontal Precision" and "Vertical Precision" delimit the precision of the recorded measures, that is, the coordinates used for taking the average must all lie within an area outlined by these values.

In case the positions calculated by the receiver do not comply with the conditions set in the survey style (Elevation mask, Horizontal precision and Vertical precision), the recording time is automatically extended. In fact, the GPS interrupts the time count at the moment it obtains unsatisfactory measures that do not comply with the specified parameters, and resumes the count when the conditions are again met.

Then, the following operative sequence is performed:

SURVEY → 4800RTCM → ROVER RADIO

From which access is gained to the options menu

<u>Rover radio</u>

| | |
|---|---|
| Type | ► cellular modem |
| Receiver port | ► Port 3 |
| Baud rate | ► 9600 |
| Parity | None |
| Init string | ? |
| Hang up | ► ATHO |
| Dial prefix | ► ATDT |
| Number to dial | ► 3358820006 |
| Dial suffix | ? |
| Post connect | ? |

It will be necessary to configure in the manner illustrated the radio channel on which the RTCM data flux will be taken. The relevant parameters are the bit rate in the communication between the instrument and the GSM modem, the port to which the latter is connected, and the number for effecting the data call.

The optional telephone numbers are available from the PGL service (localisation management package) and will vary according to the selected reference station: their format is however the same, e.g. of the type: 3358820xxx wherein the first characters are the same for all stations and the last three characters correspond to the prefix of the telephone district where the relevant station is located (e.g. Rome → 006, Milan → 002, Florence → 005,...).

According to GPS theory, the station which is nearest to the point where the measurement is being effected must be chosen as reference.

In case this station is not available, it is possible to connect oneself to another station, taking account of the fact that the distance between the base and the rover influences the measurement uncertainty. Since in the chosen survey style measures are effected only on the C/A code of the GPS signal, after the differential correction the residual errors are estimated to be 1 cm for each Km of distance existing between the rover and the base (that is, with a tolerance of the measure equal to 10ppm).

Instead, by performing a survey of the RTK kind (real time kinematic), which is examined in greater detail below, it is possible to reach a precision in the centimetre range.

I - Creation of the survey style:

- Select "Configuration/Survey styles", and then "New".

Inside the field "Style name", input "4800 RTK", corresponding to the name of the new style:

4800 RTK
Rover options
Rover Radio
Base options
Base Radio

Laser rangefinder
Topo point
Kinematic control point
Rapid point
Stakeout
Site Calibration
Duplicate point distance

II - Configuration of the survey style

Select "Configuration/Survey styles/4800 RTK/ Rover Options"

Configure the instrument in the following manner, modifying the fields "Survey Type" and "Broadcast Format", and setting a value for the field "Ins positions":

<u>Rover Options</u>

| | |
|---|---|
| Survey type | ► RTK |
| Broadcast Format | ►RTCM RTK 2.x |
| | |
| INS positions | ► RTK only |
| Elevation mask | ► 13°00'00" |
| PDOP mask | 6 |
| Antenna height | ? |
| Type | ► 14800 Internal |
| Measured to | ► HooK using |
| | 4800 tape |

III - Within the menu "Configuration/Survey Styles/4800 RTK/Rover radio" configure the instrument with:

<u>Rover Radio</u>

| | |
|---|---|
| Type | ► Cellular modem |
| Receiver Port | ► Port 3 |
| Baud rate | ► 9600 |
| Parity | None |
| Init string | ? |
| Hang up | ► ATH0 |
| Dial Prefix | ► ATDT |
| Number to dial | ► 3358820006 |
| Dial suffix | ? |
| Post connect | ? |

IV - Select "Configuration/Survey Styles/4800 RTK".

Configure the instrument by modifying the fields "Horizontal Precision" and "Vertical Precision"

<u>Topo Point</u>

| | |
|---|---|
| Auto point step size | 1 |
| Quality control | ►QC1 |
| Auto store point | ►Yes |
| Occupation time | 0m30 |
| | |
| Number of Measurements | 30 |
| Horizontal precision | 0.050m |
| Vertical precision | 0.100m |

The instrument with the set survey style ensures a precision in the centimetre range. In case it is impossible to carry out the initialisation, due to a received message of the type "Waiting for info from data base", it will be possible to operate with a survey in the modality "RT differential".

Also the survey procedures and correct data collection procedures, in real- time, are basically similar to the explanations given for the post-processing, and they are outlined here only for the purpose of providing a base for the survey procedures detailed in the following description.

Selected as usual from the main menu the function "FILES/JOB MANAGEMENT" the list of the jobs inserted inside the control unit is visualized. A new job is created in which the survey measurements are stored, by operating as follows:

-    Insert the name used to save the survey,
-    Select "NO PROIECTION/ NO DATUM", and in the following screenful maintain the fields as by default, that is "Coordinates" → GRID and "Use geoid model"→NO.

[0266]    Moreover it is necessary to indicate the project to which the instrument will refer in the current measurement session, and for this it is required to enter in "SURVEY" and to select the survey style that has been just created.

- Therefore the functions of "MEASURE POINT" are activated after insertion (inside the modem) of the SIM - which is enabled to the differential correction GPS data furnishing service-. The instrument dials the number of the PGL corresponding to the chosen reference station, which is specified in the survey style, and after initialisation of the GSM modem the following parameters must be configured (entered) on the display of the satellite receiver, once the connection has been established.

- In order to start with the session of acquisition of measurements, one operates according to the following functionality:

| Survey/Measure | |
| --- | --- |
| Point name | GPS1 |
| Code | GPS |

Method

Antenna Height (Uncor): 1.630m

Meas to: Hook using xxx tape

Time so far: Om25s

Time to go: Om5s

-    In the field "Point Name" an identification will be inserted, to which the geographical coordinates will be associated.
-    In the field "Antenna height", the value of the antenna's height will be entered
-    The "Measure" key is used to start the survey.

In accord with the setting effected during the survey creation, the instrument will average the positions calculated in a time interval of about 30 sec. The counters of the type "Time so far" and "Time to go" respectively indicate the time elapsed from the start of the measurement point and the time that still remains before the survey may be considered concluded.

After completion of the countdown in "Time to go", provided - for instance - an automatic store option has been selected, the measurement will be saved automatically. Otherwise, it is necessary to memorise the coordinates by the activation of an appropriate command.

-    In order to visualise the position currently calculated by the instrument, one can select
-    MAIN MENU →INSTRUMENT →POSITION

Once the relevant geographic coordinates have been recorded, the survey may be considered completed, and these coordinates may be displayed, if desired, according to an optional request.

13.3 Creation of a planimetric map on the control unit

During the GPS survey operations it may be useful to visualise on the field the geo-referenced point. The parameters may be set for a map oriented on the display of the control unit; the measurements acquired by the instrument, in the system

WGS84, can be transformed into the new reference system and thereafter displayed. The file contained in the control unit will include all information concerning the survey, that is, for each point it records both the WGS84 coordinates (latitude, longitude, and height on the ellipsoid) and the local planimetric coordinates (North, East) with origin fixed in anyone of the GPS points.

- Operating according to a functional sequence like

> CONFIGURATION $\rightarrow$ JOB$\rightarrow$COORDINATE SYSTEM

the following choices are made available:

> <u>KEY IN PARAMETER</u>
>
> > PROJECTION
> > DATUM TRANSFORMATION
> > HORIZONTAL ADJUSTMENT
> > VERTICAL TRANSFORMATION

- in particular, operating on PROJECTION, one obtains

> PROJECTION
>
> > TYPE ►NON PROJECTION
> > SITE CALIBRATION
>
> COORDINATE ► GRID

- wherein the field "TYPE" permits to choose among various options arranged in a list containing various kinds of planimetric projections. Once the projection has been specified, it will be possible to pass from a three dimensional reference system to a two dimensional one, which is suited to be represented on a map.

> <u>NO PROJECTION</u>
> SCALE ONLY FACTOR
> PLANE
> MERCATOR
> TRASVERSE MERCATOR
> UNIVERSE TRASVERSE MERCATOR
> LAMBERT CONFORMAL CONIC1
> LAMBERT CONFORMAL CONIC2

- After selection of "TRASVERSE MERCATOR" it is necessary to set the following items:

| PROJECTION | |
| --- | --- |
| TYPE | TRASVERSE MERCATOR |
| FALSE NORTHING | 0.000 m |
| FALSE EASTING | 0.000 m |
| ORIGIN LAT. | ? |
| CENTRAL MERIDIAN | ? |
| SCALE FACTOR | 1 |

(continued)

| PROJECTION | |
| --- | --- |
| TYPE | TRASVERSE MERCATOR |
| SEMI MAJOR AXIS | 6378137.000 m |
| FLATTERING | 298.2572229329 |

- The values which will have to be inserted in the fields "ORIGIN LAT" and "CENTRAL MERIDIAN" correspond to the latitude and longitude coordinates of a previously acquired GPS point. This point will correspond to the origin of the new local reference system.

From the items "ORIGIN LAT" or "CENTRAL MERIDIAN" it is possible to activate various correlated functions of the type:

UNITS OPERATOR LIST N S

- By means of the usual "LIST" function, activated by the key F3, it is possible to display the list of points present in the actual survey. From this, it is possible to scroll until the cursor highlights the desired GPS point (e.g. GPS1); thereafter a "REVIEW" function is activated.

- The coordinates of latitude and longitude must be stored before one exits from the procedure.

- Thereafter, insertion of the coordinates latitude and longitude respectively) is performed in the fields "ORIGIN LAT" and "CENTRAL MERIDIAN".

- By the activation of a function of "DATUM TRANSFORMATION" a multiple selection is made available, from which one enters the function "THREE PARAMETERS" within the list of options, and after acceptance of a configuration of the following type

DATUM TRANSFORMATION

| | |
| --- | --- |
| TYPE | ► THREE PARAMETERS |
| SEMI MAJOR AXIS | 6378137.000 M |
| FLATTERING | 298.2572229329 |
| TRASLATION X : | 0.000 m |
| TRASLATION Y: | .0.000 m |
| TRASLATION Z: | 0,000 m |

It is possible to return to the main menu; then, selecting FILES → MAP OF CURRENT JOB, a map with all survey points is displayed on the control unit. The map orientation is such that the NORTH appears on the upper part of the display. Under certain conditions it may occur that nothing appears on the control unit; in this case, it is possible to activate the functions "ZOOM / TO POINT" in order to enlarge the map and centre the same on a previously acquired point, by entering its name.

13.4 Antenna orientation (Azimuth)

In case the operator's aim exclusively consists in determining the coordinates of an accessible point, such as the base of an antenna support, or the locality of a RBS site, the survey may be considered ended after memorisation of a single GPS point.

If it is desired to know the orientation with respect to the geographic North, or alternatively the coordinates of a radiating system which is not accessible by means of a GPS receiver, one must resort to a mixed-type survey, consisting in the combined use of a satellite receiver and a laser total station (such as TTS 500

Trimble or the equivalent Leica TCRM 1102).

The operative sequence - in this case too - consists of a series of consecutively performed actions:

- Determination of a couple of mutually visible GPS points, located at a distance allowing to minimise the error in the determination of the antenna azimuth.
- Creation of a map for directly visualising on the spot the orientation of the antenna.
- Arrangement and orienting of the total station, in order to determine the inaccessible points.
- Survey of the points and measurement (on the spot) of the azimuth.

The required operations for measuring GPS coordinates have already been illustrated. The choice of points depends on some constraints; first of all they must be in visibility with respect to each other and with respect to the radiating system, in order to be a reference for the geo-referencing of inaccessible points.

In particular, once a pair of points has been determined by means of the GPS system and after having specified the orientation of their connecting line towards the geographic North, the total station is able to frame antenna points inside a WGS84 system, by computing them making use of measurements of distances and relative angles. Fig. 4 shows how the position of collimated points is univocally determined once two parameters have become known:

HD, being the distance on the horizontal plane, with respect to a GPS point;
HÂ, being the angular displacement on the horizontal plane with respect to an oriented reference.

The first parameter corresponds to the classical measure provided by a total station, and the second parameter is also detected by the total station, through a procedure of the type "STATION-SET-UP".

The determination of the two GPS points is to be performed through minimisation of the reference error, since it directly affects the calculation of the antenna azimuth. A formula representing the degradation of the orientation as a function of the GPS measurements inaccuracy, is the following one:

$$\max \delta = \arcsin (2\varepsilon / d) \tag{eq.1}$$

where

$\varepsilon$ = maximum error relative to the position of each GPS point,
d = distance of the two GPS points on the horizontal plane;
max $\delta$ = maximum error made in the calculation of the antenna azimuth
Maximum error of 2° in the azimuth

| Max. GPS error (m) | Min. base-line distance (m) |
|---|---|
| 0.1 | 5.7 |
| 0.2 | 11.5 |
| 0.3 | 17.2 |
| 0.4 | 23.0 |
| 0.5 | 28.7 |
| 0.6 | 34.4 |
| 0.7 | 40.2 |
| 0.8 | 45.9 |
| 0.9 | 51.6 |
| 1 | 57.4 |
| 1.1 | 63.1 |
| 1.2 | 68.8 |
| 1.3 | 74.5 |
| 1.4 | 80.3 |
| 1.5 | 86.0 |

This table is an illustration of the above formula. For illustrative purposes it may be noted that assuming an error of about 0.7 m on the survey of each GPS point, it is necessary to have a distance D of the baseline corresponding to about 40 m, for reaching an error of 2° on the azimuth. It has been observed that an error of about 0.7 m is rather significant where the GPS survey is not particularly critical with regard to visibility of the visual horizon and interference.

Once the points - that will form the reference- have been chosen, and after the calculation of their geographical coordinates has been performed, in the following step only the total station is used.

13.5 Survey style creation for the total station and orientation of this station

In order to collimate the various antenna points, it is necessary to position the total station exactly on one of the two GPS points. The choice is at the discretion of the operator, provided a good visibility is obtained towards the radiating system.

It may happen that - unfortunately - it is impossible to frame the whole system from a single point; we may operate to position the station first on one GPS point, to perform the installation of the station, to collimate some of the antennas, to close the survey, and to successively go to the other point in order to collimate the remaining antennas.

By directly acting on the control unit, we create a new survey style, e.g. "TTS500". Through the procedure " CONFIGURATION → SURVEY STYLE" the following parameter values can be set:

STYLE DETAILS
STYLE NAME:    TTS 500
STYLE TYPE:    ►CONVENTIONAL

The characteristics of the survey style are specified by a sequence of instructions, through which it is possible to define the type of instrument used, the characteristics of the collimated points, and the modalities of performing the measurements.

- Therefore, from an operative sequence

CONFIGURATION →SURVEY STYLE→ TS500→INSTRUMENTS

one obtains:

INSTRUMENTS

MANUFACTURER:XXXX

MODEL xxxxxx TTS 300/500

HA VA STATUS RATE : 1.0 S

Having specified that the total station corresponds to a certain model xxxx, the instrument will be automatically recognised after connection to the control unit.

- On the other hand, from the sequence

CONFIGURATION →SURVEY STYLE→/TTS550 →TARGET

one has

SURVEY / TARGET

PRISM CONSTANT: ?

HEIGHT: ?

The edited values vary depending on whether the orientation of the total station is being performed or the antenna points are being measured

- in the former case "PRISM CONSTANT: -30mm°, and "HEIGHT" equals the height of the stake on which the prism is mounted
- in the latter case "PRISM CONSTANT: Omm" and "HEIGHT: Om".
When the new survey style is created, the parameters are set bt the default in the same manner as if the orientation of the total station were performed.
- The result of the operative sequence

CONFIGURATION →/SURVEY STYLE → TTS500 →TOPO POINT will be

<u>TOPO POINT</u>

MEASURE DISPLAY :     ► HA VA SD
AUTO POINT STEP :     1
VIEW BEFORE STORAGE :    ►YES

The display option allows to check - during the measurements on the field - the distances and the angular orientations of collimated points. By accepting the input data, the new survey style has been created, so that the orientation of the total station may be performed

- Then, the total station is mounted at the GPS point which is visible from the inaccessible antenna points, and, at the other point, one positions the reflecting prism on the stake.
- Then, by means of the sequence :
  SURVEY → SURVEY STYLE TTS500 → STATION SET-UP
  one obtains

<u>SURVEY / STATION SET-UP</u>

INSTRUMENT POINT NAME :    GPS2
INSTRUMENT HEIGHT    1.75
BACKSIGHT POINT NAME :    GPS1
BACKSIGHT HEIGHT :    1.8
AZIMUTH (COMPUTED):    ?
METHOD:    ► ANGLE AND DISTANCE

The values corresponding to the various fields have the following meanings:

INSTRUMENT POINT NAME → Name of the GPS point that was previously assigned, on which the laser total station is positioned.
INSTRUMENT HEIGHT → Height of the total station, as measured perpendicularly to the ground, and starting from the notch (mark) present on one side of the instrument.
BACKSIGHT POINT NAME → Name of the GPS point, that was assigned previously, were the reflecting prism is positioned
BACKSIGHT HEIGHT height of the prism
AZIMUTH → Orientation, with respect to the geographic North, of the "Baseline" formed by the pair of GPS points. This value is visualised if a planimetric map has previously been associated to the project.

- Among the possible options, "PRISM CONSTANT: -30mm" is then selected
- The laser total station is pointed to the centre of the prism, and the "MEASURE" function is activated, thereby obtaining:

<u>SURVEY / STATION SET- UP</u>

INSTRUMENTS POINT NAME :    GPS2
INSTRUMENT HEIGHT:    1.75
BACKSIGHT POINT NAME    GPS1
BACKSIGHT HEIGHT:    1.8
AZIMUTH (COMPUTER):    300°15'22"
METHOD:    ► ANGLE AND DISTANCE
ΔH. DIST    - 0.336m
ΔV. DIST    - 0.825m

The values corresponding to the residual errors of the station set-up appear in these parameters. The position of the collimated point is computed with respect to the position of the total station, so as to derive its distance, and its horizontal and vertical angular orientation with respect to the laser total station. If this position is compared to that derived from the GPS survey, a difference is noted, which is mainly due to the errors affecting the GPS measure. These errors have been called above 'residual errors'. The information of the residues may be used in a qualitative manner, in the formula:

$$\max \delta = \arcsin (2\varepsilon/d)$$

where

$$\varepsilon = \Delta H.DIST / 2$$

$$d = RAD(SD^2 - \Delta V.DIST^2)$$

and SD is the measure of the tilted distance, displayed on the display of the total station.

If the value of max $\delta$, corresponding to an estimate of the maximum error, is not excessive, the station setup is acceptable and the configuration may be memorised.

13.6 Survey of the points, and real time measurement of the azimuth on the field.

The last operations to be carried out concern the survey of inaccessible antenna points. If the aim of the operator exclusively consists in determining the geographical coordinates of a single antenna, any point on the latter may be collimated.

Alternatively, if the orientation of a cell of a RBS is to be determined, it will be necessary to aim - by means of the total station - at two points respectively located at the rightmost and leftmost ends of the rising section.

If one intends to calculate the azimuth of a single radiating apparatus, or of a cell without rising section, two points for each antenna, which belong to the same horizontal plane, will have to be collimated; for instance the screws on the radome that covers the antenna.

By activation of the sequence
SURVEY $\rightarrow$ SURVEY STYLE $\rightarrow$ TTS500 $\rightarrow$ MEASURE POINT, one obtains

| SURVEY / MEASURE POINT | |
|---|---|
| POINT NAME | P1 |
| CODE | ? |
| TARGET HEIGHT | 0 |

- The setting options are respectively initialised as

"PRISM CONSTANT: Omm".
"TARGET HEIGHT 0".

- In order to collimate a reference on the antenna, first the "MEASURE" function is activated, and then the memorisation function. This operation is repeated for each individual point.
- It is possible to directly display, on the control unit, the azimuth corresponding to a pair of points, by selecting:

MAIN MENU $\rightarrow$ COGO $\rightarrow$ COMPUTE AZIMUTH

| COGO / COMPUTE AZIMUTH | |
|---|---|
| METHOD | BETWEEN TWO POINTS |
| FROM POINT | GPS2 |

(continued)

| COGO / COMPUTE AZIMUTH | |
|---|---|
| METHOD | BETWEEN TWO POINTS |
| TO POINT | GPS1 |
| COMPUTED AZIMUTH (GRID) | 285°11'22" |

- Insert the names used when acquiring the relevant points. If a single antenna is being framed, with the settings indicated above for the planimetric map, the name of the leftmost point must be inserted first. The displayed azimuth corresponds to the angle between the direction of the geographic North and the vector oriented from the first inserted point to the second. In order to know the true antenna orientation, it will be necessary to add / subject 90° to / from the displayed value, depending on how the antenna front is oriented with respect to the geographic North.

**Claims**

1. A method for controlling the installation of an antenna of a radio base station used for cellular telephony, said method being **characterized in that** it comprises:

   - providing a topographic instrument at a first position, remote from said antenna;
   - collimating said topographic instrument on a first point (8', P1) associated to said antenna, so as to determine, in a first topographic survey, distances between said first position and said first point or between projections thereof on predetermined reference planes, and angles between a first line of sight, connecting said first position and said first point, and said predetermined reference planes;
   - collimating said topographic instrument on a second point (8", P2, 23) associated to said antenna, separated from said first point, so as to determine, in a second topographic survey, distances between said first position and said second point or between projections thereof on said predetermined reference planes, and angles between a second line of sight, connecting said first position and said second point, and said predetermined reference planes;
   - determining at least one positioning parameter characterizing a positioning of the antenna by using at least one of said distances and angles determined in said first and in said second topographic surveys;
   - comparing the determined at least one positioning parameter with a corresponding design parameter.

2. A method according to claim 1, wherein said at least one parameter comprises a tilt ($\alpha$) of said antenna, wherein said first point and said second point are points of said antenna lying on a same vertical plane of said antenna, and wherein said step of determining said tilt comprises deriving said tilt with the following formula:

$$\alpha = Arctg\left(\frac{dHD}{dVD}\right)$$

   wherein dHD is a difference (b) between a distance between projections of said first position and said first point on a horizontal plane, and a distance between projections of said first position and of said second point on said horizontal plane, wherein dVD is a difference (a) between a distance between projections of said first position and said first point on a vertical plane, and a distance between projections of said first position and of said second point on said vertical plane.

3. A method according to claim 1, wherein said at least one parameter comprises a height (22) of said antenna, wherein said first point is a point on a base of said antenna or a centre point of said antenna, wherein said second point is a point on the ground corresponding to a base of a support of said antenna, and wherein said step of determining said height (22) comprises calculating a difference between a distance between projections of said first position and said first point on a vertical plane, and a distance between projections of said first position and of said second point on said vertical plane.

4. A method according to claim 1, wherein said at least one parameter comprises an azimuth of said antenna, wherein said first point and said second point are points of said antenna lying on a same horizontal plane of said antenna, said method further comprising:

- associating a GPS receiver to said topographic instrument;
- determining, by using said GPS receiver, first geographic coordinates of said first position in a geodetic reference system;
- disposing a prism in a second position (GPS2), at a distance from said first position (GPS1), remote from said antenna;
- determining, by using said GPS receiver, second geographic coordinates of said second position in a geodetic reference system;
- determining an orientation of said reference baseline versus the geographic North using said first and second geographic coordinates;
- collimating said topographic instrument on said prism, so as to determine, at said topographic instrument, a reference baseline connecting said first and said second position;
- determining, in said first topographic survey, a first angle between said first line of sight and a plane comprising said reference baseline on a horizontal plane, and a first distance between a projection of said first point and of said first position on a horizontal plane;
- determining, in said second topographic survey, a second angle between said second line of sight and said plane comprising said reference baseline on said horizontal plane, and a second distance between a projection of said second point and of said first position on said horizontal plane;
- determining an orientation of a connecting line between said first and second point on said horizontal plane versus said reference baseline from said first and second angles and from said first and second distances;
- determining said azimuth from said orientation.

5. A method according to any one of claims 1 to 4, wherein said topographic instrument is a laser station.

6. A method according to any one of claims 1 to 5, further comprising adjusting the positioning of the antenna so as to conform the determined positioning parameter to the corresponding design parameter.

**Patentansprüche**

1. Verfahren zum Kontrollieren der Installation einer Antenne einer Funk-Basisstation, die für Mobilfunk verwendet wird, wobei das Verfahren **dadurch gekennzeichnet ist, daß** es folgendes umfaßt:

- Bereitstellen eines topographischen Instruments an einer ersten Position, die von der Antenne entfernt ist;
- Kollimieren des topographischen Instruments auf einen ersten Punkt (8', P1), der mit der Antenne assoziiert ist, um in einer ersten topographischen Aufnahme Abstände zwischen der ersten Position und dem ersten Punkt oder zwischen Projektionen derselben auf vorbestimmte Referenzebenen und Winkel zwischen einer ersten Visierlinie, welche die erste Position und den ersten Punkt verbindet, und den vorbestimmten Referenzebenen zu ermitteln;
- Kollimieren des topographischen Instruments auf einen zweiten Punkt (8", P2, 23), der mit der Antenne assoziiert ist und von dem ersten Punkt getrennt ist, um in einer zweiten topographischen Aufnahme Abstände zwischen der ersten Position und dem zweiten Punkt oder zwischen Projektionen derselben auf die vorbestimmten Referenzebenen und Winkel zwischen einer zweiten Visierlinie, welche die erste Position und den zweiten Punkt verbindet, und den vorbestimmten Referenzebenen zu ermitteln;
- Ermitteln mindestens eines Positionierungsparameters, der eine Positionierung der Antenne charakterisiert, unter Verwendung mindestens eines Abstandes und/oder Winkels, der bzw. die in der ersten und der zweiten topographischen Aufnahme ermittelt wurde bzw. wurden; und
- Vergleichen des ermittelten mindestens einen Positionierungsparameters mit einem Auslegungsparameter ("design parameter").

2. Verfahren nach Anspruch 1, bei dem der genannte mindestens eine Parameter eine Neigung ($\alpha$) der Antenne umfaßt, wobei der erste Punkt und der zweite Punkt Punkte der Antenne sind, welche auf einer identischen vertikalen Ebene der Antenne liegen, und wobei der Schritt des Ermittelns der Neigung die Herleitung der Neigung gemäß der folgenden Formel umfaßt:

$$\alpha = Arctg\left(\frac{dHD}{dVD}\right),$$

wobei dHD eine Differenz (b) zwischen einem Abstand zwischen Projektionen der ersten Position und des ersten Punktes auf einer horizontalen Ebene und einem Abstand zwischen Projektionen der ersten Position und des zweiten Punkts auf der horizontalen Ebene ist, wobei dVD eine Differenz (a) zwischen einem Abstand zwischen Projektionen der ersten Position und des ersten Punktes auf einer vertikalen Ebene und einem Abstand zwischen Projektionen der ersten Position und des zweiten Punkts auf der vertikalen Ebene ist.

3. Verfahren nach Anspruch 1, bei dem der mindestens eine Parameter eine Höhe (22) der Antenne umfaßt, wobei der erste Punkt ein Punkt an einer Basis der Antenne oder ein Mittelpunkt der Antenne ist, wobei der zweite Punkt ein Punkt auf der Erde ist, der einer Basis einer Halterung der Antenne entspricht, und wobei der Schritt des Ermittelns der Höhe (22) das Berechnen einer Differenz zwischen einem Abstand zwischen Projektionen der ersten Position und des ersten Punkts auf einer vertikalen Ebene und einem Abstand zwischen Projektionen der ersten Position und des zweiten Punkts auf der vertikalen Ebene umfaßt.

4. Verfahren nach Anspruch 1, bei dem der mindestens eine Parameter einen Azimut der Antenne umfaßt, wobei der erste Punkt und der zweite Punkt Punkte der Antenne sind, die auf einer identischen horizontalen Ebene der Antenne liegen, wobei das Verfahren ferner folgendes umfaßt:

- Assoziieren eines GPS-Empfängers mit dem topographischen Instrument;
- Ermitteln, unter Verwendung des GPS-Empfängers, von ersten geographischen Koordinaten der ersten Position in einem geodätischen Bezugssystem;
- Anordnen eines Prismas in einer zweiten Position (GPS2) unter einem Abstand von der ersten Position (GPS1), die von der Antenne entfernt ist;
- Ermitteln, unter Verwendung des GPS-Empfängers, von zweiten geographischen Koordinaten der zweiten Position in einem geodätischen Bezugsystem;
- Ermitteln einer Orientierung der Referenz-Grundlinie bezüglich des geographischen Nordens unter Verwendung der ersten und zweiten geographischen Koordinaten;
- Kollimieren des topographischen Instruments auf das Prisma, um an dem topographischen Instrument eine Referenz-Grundlinie zu ermitteln, die die erste und die zweite Position verbindet;
- Ermitteln, in der ersten topographischen Aufnahme, eines ersten Winkels zwischen der ersten Visierlinie und einer Ebene, die die Referenz-Grundlinie umfaßt, in einer horizontalen Ebene und eines ersten Abstands zwischen einer Projektion des ersten Punktes und der ersten Position auf einer horizontalen Ebene;
- Ermitteln, in der zweiten topographischen Aufnahme, eines zweiten Winkels zwischen der zweiten Visierlinie und der Ebene, welche die Referenz-Grundlinie enthält, in der horizontalen Ebene, und eines zweiten Abstandes zwischen einer Projektion des zweiten Punkts und der ersten Position auf der horizontalen Ebene;
- Ermitteln einer Orientierung einer Verbindungslinie zwischen dem ersten und dem zweiten Punkt in der horizontalen Ebene gegenüber der Referenz-Grundlinie aus dem ersten und dem zweiten Winkel und aus dem ersten und dem zweiten Abstand; und
- Ermitteln des Azimuts aus der Orientierung.

5. Verfahren nach einem der Ansprüche 1 bis 4, bei dem das topographische Instrument eine Laserstation ist.

6. Verfahren nach einem der Ansprüche 1 bis 5, welches ferner das Einstellen der Position der Antenne derart umfaßt, daß der ermittelte Positionierungsparameter mit dem zugehörigen Auslegungsparameter übereinstimmt.

**Revendications**

1. Procédé pour réaliser l'installation d'une antenne de station de base radio pour la téléphonie cellulaire, ledit procédé étant **caractérisé en ce qu'**il comprend des étapes consistant à :

- disposer un instrument topographique à un premier endroit, à distance de ladite antenne ;
- collimater ledit instrument topographique sur un premier point (8', P1) associé à ladite antenne, de manière à détermine, lors d'un premier relevé topographique, des distances entre ladite première position et ledit premier point ou entre des projections de ceux-ci sur des plans de référence prédéterminés, et des angles entre une première ligne de visée, reliant ladite première position et ledit premier point, et lesdits plans de référence prédéterminés ;

- collimater ledit instrument topographique sur un second point (8", P2, 23) associé à ladite antenne, séparé dudit premier point, de manière à déterminer, lors d'un second relevé topographique, des distances entre ladite première position et ledit second point ou entre des projections de ceux-ci sur lesdits plans de référence prédéterminées, et des angles entre une seconde ligne de visée, reliant ladite première position et ledit second point, et lesdits plans de référence prédéterminés ;

- déterminer au moins un paramètre de positionnement caractérisant un positionnement de l'antenne à l'aide d'au moins une desdites distances et d'au moins un desdits angles déterminés lors desdits premier et second relevés topographiques ;

- comparer le/les paramètres de positionnement déterminés avec un paramètre théorique correspondant.

2. Procédé selon la revendication 1, dans lequel ledit/lesdits paramètres comprennent une inclinaison ($\alpha$) de ladite antenne, ledit premier point et ledit second point sont des points de ladite antenne situés dans un même plan vertical de ladite antenne, et ladite étape de détermination de ladite inclinaison consistant à dériver ladite inclinaison à l'aide de la formule suivante :

$$\alpha = Arctg\left(\frac{dHD}{dVD}\right)$$

où dHD est une différence (b) entre une distance entre des projections de ladite première position et dudit premier point dans un plan horizontal, et une distance entre des projections de ladite première position et dudit second point dans ledit plan horizontal, dVD étant une différence (a) entre une distance entre des projections de ladite première position et dudit premier point dans un plan vertical, et une distance entre des projections de ladite première position et dudit second point dans ledit plan vertical.

3. Procédé selon la revendication 1, dans lequel ledit/lesdits paramètres comportent une hauteur (22) de ladite antenne, ledit premier point étant un point sur une embase de ladite antenne ou un point central de ladite antenne, ledit second point est un point au sol correspondant à une embase d'un support de ladite antenne, et ladite étape de détermination de ladite hauteur (22) consiste à calculer une différence entre une distance entre des projections de ladite première position et dudit premier point dans un plan vertical, et une distance entre des projections de ladite première position et dudit second point dans ledit plan vertical.

4. procédé selon la revendication 1, dans lequel ledit/lesdits paramètres comprennent un azimut de ladite antenne, ledit premier point et ledit second point sont des points de ladite antenne situés dans un même plan horizontal de ladite antenne, ledit procédé comprenant en outre des étapes consistant à :

- associer un récepteur GPS audit instrument topographique ;
- déterminer, à l'aide dudit récepteur GPS, des premières coordonnées géographiques de ladite première position dans un système de référence géodésique ;
- disposer un prisme dans une seconde position (GPS2), à une certaine distance de ladite première position (GPS), à l'écart de ladite antenne ;
- déterminer, à l'aide dudit récepteur GPS, des secondes coordonnées géographiques de ladite seconde position dans un système de référence géodésique ;
- déterminer une orientation de ladite ligne de base de référence par rapport au nord géographique à l'aide desdites premières et secondes coordonnées géographiques ;
- collimater ledit instrument topographique sur ledit prisme, de manière à déterminer, sur ledit instrument topographique, une ligne de base de référence reliant lesdites première et seconde positions ;
- déterminer, lors dudit premier relevé topographique, un premier angle entre ladite première ligne de visée et un plan contenant ladite ligne de base de référence dans un plan horizontal, et une première distance entre une projection dudit premier point et de ladite première position dans un plan horizontal ;
- déterminer, lors dudit second relevé topographique, un second angle entre ladite seconde ligne de visée et ledit plan contenant ladite ligne de base de référence dans ledit plan horizontal, et une seconde distance entre une projection dudit second point et de ladite première position dans ledit plan horizontal ;
- déterminer une orientation d'une ligne reliant ledit premier point et ledit second point dans ledit plan horizontal par rapport à ladite ligne de base de référence d'après lesdits premier et second angles et d'après lesdites première et seconde distances ;

- déterminer ledit azimut d'après ladite orientation.

5. Procédé selon l'une quelconque des revendications 1 à 4, dans lequel ledit instrument topographique est une station laser.

6. Procédé selon l'une quelconque des revendications 1 à 5, comprenant en outre une étape consistant à régler la position de l'antenne afin de rendre le paramètre de positionnement déterminé conforme au paramètre théorique correspondant.

DIFFERENTIAL GPS POSITIONING

FIG. 1

FIG. 2

| SV | Az | Elev | SNRL1 | SNRL2 |
|---|---|---|---|---|
| ✓ 3 | 60° | 33° | 47.5c | 35.1e |
| ✓ 14 | 340° | 16° | 44.8c | 27.4e |
| ✓ 16 | 303° | 35° | 49.4c | 36.9e |
| ✓ 18 | 239° | 56° | 50.8c | 41.4e |
| ✓ 19 | 258° | 31° | 48.3c | 34.5e |
| ✓ 22 | 125° | 46° | 48.8c | 39.8e |

Instrument/Satellites

H=0,022m V=0,056m
RTK=Fixed RMS=23

Instrument/Satellites

N

H=0,010m V=0,026m
RTK=Fixed RMS=10

FIG. 3

EP 1 464 981 B1

FIG. 4

Antenna points

8″

8‴

8″

8′

9

10

Total station GPS1
vertex

Retroreflector prism
GPS2 vertex

## FIG. 5

13″

13′

12

14

## FIG. 6

FIG. 7

FIG. 8

FIG. 9

EP 1 464 981 B1

FIG. 10

FIG. 11

FIG. 12

EP 1 464 981 B1

FIG. 13

FIG. 14

FIG. 15

EP 1 464 981 B1

FIG. 16

EP 1 464 981 B1

AZIMUTH          TILT

FIG. 17a        FIG. 17b

FIG. 17

AZIMUTH

TILT

P2c        P1c

P1d

P3d

P5d

P4d        P6d

P2d

FIG. 18a        FIG. 18b

FIG. 18

AZIMUTH

P3ℓ          P4ℓ

Top view

FIG. 19a

AZIMUTH

P2f

P1f

FIG. 19b

TILT

P3g

P1g

P2g

P4g

FIG. 19c

FIG. 19

EP 1 464 981 B1

AZIMUTH

TILT

P2h    P1h

P1i

P2i

P1h    Top view    P2h

Top view

FIG. 20a

FIG. 20b

FIG. 20

AZIMUTH

TILT

P2ℓ

P1ℓ

P1m

P2m

FIG. 21a

FIG. 21b

FIG. 21

TILT

P1n

P3n

P4n

P2n

FIG. 22

EP 1 464 981 B1

FIG. 23

RS232DB9

FIG. 24

RS232
9 PIN M.
Modem GSM SIDE

RS232
9 PIN M.
GPS SIDE

FIG. 25

P1

P2

NORD

GPS1

HA

HD

E

AZp

D

E

AZb

GPS2

FIG. 26